# EUROPEAN PATENT APPLICATION

(11) **EP 4 671 960 A1**
(43) Date of publication of application: **31.12.2025**
(21) Application number: 24855242.4
(22) Date of filing: 05.03.2024
(51) Int. Cl.: G06F 3/14, H04M 1/72448

(54) **TWO-DIMENSIONAL CODE DISPLAY METHOD, ELECTRONIC DEVICE, CHIP AND STORAGE MEDIUM**

(30) Priority: 18.08.2023 CN 202311050723
(71) Applicant: Honor Device Co., Ltd., Shenzhen, Guangdong 518040 (CN)
(72) Inventor: WANG, Xiaofei, Shenzhen, Guangdong 518040 (CN); WANG, Huan, Shenzhen, Guangdong 518040 (CN)
(74) Representative: Gill Jennings & Every LLP
(86) International application number: PCT/CN2024/080177
(87) International publication number: WO 2025/039511

(57) **Abstract**

Embodiments of this application provide a two-dimensional code display method, an electronic device, a chip, and a storage medium, and relate to the field of terminal technologies. When the electronic device is in a folded state, if an operation of triggering display of a two-dimensional code on a back screen is received, a screenshot of a payment application is obtained, and whether the screenshot of the payment application includes a two-dimensional code is monitored. If the two-dimensional code is not displayed, a two-dimensional code display task on the back screen is moved to the main screen, and an interface of the payment application is displayed on the main screen. In this way, a user can find that the back screen fails to display the two-dimensional code without a need to flip the screen, triggers display of the two-dimensional code on the main screen through an operation on the interface of the payment application on the main screen, such as an operation of authorizing the application to enable a payment code, an operation of determining to open a two-dimensional code interface, and an operation of entering an unlock password of the application, and uses the two-dimensional code for scanning, thereby improving user experience.

## Description

This application claims priority to Chinese Patent Application No. 202311050723.8, filed with the China National Intellectual Property Administration on August 18, 2023 and entitled "TWO-DIMENSIONAL CODE DISPLAY METHOD, ELECTRONIC DEVICE, CHIP, AND STORAGE MEDIUM", which is incorporated herein by reference in its entirety.

### TECHNICAL FIELD

This application relates to the field of terminal technologies, and in particular, to a two-dimensional code display method, an electronic device, a chip, and a storage medium.

### BACKGROUND

Currently, there is a growing demand for a foldable-screen device that has both portability and a large display.

An outward foldable phone is used as an example. When the outward foldable phone is in a folded state, the main screen faces the user, the back screen faces away from the user, and the outward foldable phone is similar to a bar phone. In this case, the user uses only the main screen, and does not pay attention to the back screen, resulting in that the back screen is in an idle state. Therefore, how to improve utilization of the back screen becomes a problem that needs to be urgently resolved.

### SUMMARY

This application provides a two-dimensional code display method, an electronic device, a chip, and a storage medium, to resolve a technical problem that utilization of a back screen of a foldable-screen device is relatively low.

To achieve the foregoing objective, the following technical solutions are used in this application:

According to a first aspect, an embodiment of this application provides a two-dimensional code display method. The method may be applied to an electronic device, for example, a foldable-screen device. The foldable-screen device may include a main screen and a back screen. The method may include:
displaying a first interface of a first application on the main screen at a first time point;
receiving a first tap operation on the back screen, and displaying a second interface of a second application on the back screen at a second time point, where the second interface includes a two-dimensional code, the first interface is displayed on the main screen when the second interface is displayed on the back screen, the electronic device is in a folded state between the first time point and the second time point, the second application is an application that displays the two-dimensional code on the back screen, and the second application has enabled a two-dimensional code function;
displaying the first interface on the main screen at a third time point; and
receiving a second tap operation on the back screen, and displaying a third interface of a third application on the main screen at a fourth time point, where the third interface does not include a two-dimensional code, the electronic device is in the folded state between the third time point and the fourth time point, the third application is an application that displays a two-dimensional code on the back screen, and the third application does not enable a two-dimensional code function.

The second time point is later than the first time point, the third time point is later than the second time point, and the fourth time point is later than the third time point. The first application may be any application in the electronic device, such as a desktop application or an e-book application. The second application and the third application are applications that can provide a two-dimensional code, such as a payment application.

In the foregoing solution, when the electronic device is in a folded state, the main screen faces a user and the back screen faces away from the user. If the user wants to use a two-dimensional code, the user may tap the back screen. If the second application is an application that displays a two-dimensional code by default on the back screen, and the second application has enabled a two-dimensional code function, the electronic device may successfully pull up a two-dimensional code on the back screen (for example, a payment code, a collection code, a passenger code, a health code, or an electronic social security card). In this way, in a case in which the user does not need to flip the back screen toward the user, the two-dimensional code of the second application can be quickly displayed on the back screen, and code scanning is performed by using the two-dimensional code, thereby improving utilization of the back screen.

After this, when the electronic device is in the folded state, the user may tap the back screen again. If the third application is an application that displays a two-dimensional code by default on the back screen, and the third application has not enabled the two-dimensional code function, the electronic device may display, on the main screen, an interface that includes no two-dimensional code (for example, an interface that prompts the user to enable the two-dimensional code function). In this way, the user can find that displaying the two-dimensional code on the back screen fails without flipping the screen, and enable the two-dimensional code.

In a possible implementation, displaying the second interface of the second application on the back screen includes: displaying the second interface of the second application on the back screen based on the fact that the second application has enabled the two-dimensional code function.

In a possible implementation, displaying the third interface of the third application on the main screen includes: displaying the third interface of the third application on the main screen based on the fact that the interface of the third application does not include a two-dimensional code (that is, the third application does not enable a two-dimensional code function).

In a possible implementation, the foldable-screen device may be an outward foldable device or an inward foldable device. If the foldable-screen device is an outward foldable device, the outward foldable device may include a display screen, and the main screen and the back screen are two display areas of the display screen. If the foldable-screen device is an inward foldable device, the outward foldable device includes two display screens, one display screen is the back screen, and the other display screen is the main screen. The main screen may be bent into at least two display areas.

Regardless of whether the foldable-screen device has one or more display screens, the inward foldable device and the outward foldable device may be folded into three forms: a folded state, a hovering state, and an unfolded state. When the foldable-screen device is in the folded state, the main screen and the back screen are oriented in opposite directions, for example, the main screen faces the user and the back screen faces away from the user. When the foldable-screen device is in the unfolded state, the main screen and the back screen are oriented in the same direction, for example, both the main screen and the back screen face the user. It should be noted that "the main screen faces the user" means that a side of the main screen used to display content is facing the user, and the user can see the content displayed on the main screen; and "the back screen faces away from the user" means that a side of the back screen used to display content is facing away from the user, and the user cannot see the content displayed on the back screen.

In a possible implementation, the second application and the third application may be different applications. For example, the user may first set the second application to an application that displays a two-dimensional code by default on the back screen. If the user taps the back screen and the second application has enabled the two-dimensional code function, the two-dimensional code of the second application may be pulled up on the back screen. Then, the user may set the third application to an application that displays a two-dimensional code by default on the back screen. If the user taps the back screen and the third application has not enabled the two-dimensional code function, an interface for prompting the user to enable the two-dimensional code for the third application may be displayed on the main screen.

In a possible implementation, the second application and the third application are a same application. For example, the user may first set an application to an application that displays a two-dimensional code by default on the back screen. If the user taps the back screen and a two-dimensional code function is enabled on the application, a two-dimensional code may be pulled up on the back screen. Then, the user may disable the two-dimensional code function of the application, and if the user taps the back screen, an interface for prompting the user to enable the two-dimensional code may be displayed on the main screen.

In a possible implementation, the second application and the third application are a same application, and the application provides at least two types of two two-dimensional codes. For example, the user may first set a two-dimensional code of an application to a two-dimensional code displayed by default on the back screen. If the user taps the back screen and a function of the two-dimensional code is enabled, the two-dimensional code may be pulled up on the back screen. Then, the user may set another two-dimensional code of the application to a two-dimensional code displayed by default on the back screen. If the user taps the back screen and a function of the another two-dimensional code is not enabled, an interface for prompting the user to enable the another two-dimensional code may be displayed on the main screen.

In a possible implementation, the foregoing "tap operation on the back screen" may be two consecutive tap operations on the back screen, that is, a double-tap operation. "Two consecutive tap operations" specifically means that a time interval between the first tap operation and the second tap operation is less than or equal to a preset time interval, for example, 0.5S. For example, at least one sensor may be disposed at a position corresponding to the back screen on the phone body, and is configured to collect a vibration signal generated on the back screen.

In the foregoing solution, when the user needs to pull up a two-dimensional code interface of the payment application on the back screen, the user is more accustomed to performing a tap operation on the back screen. Therefore, it is more reasonable to dispose the sensor on the body at a position corresponding to the back screen.

In a possible implementation, after the second tap operation on the back screen is received, and before the fourth time point, the method may further include: displaying a fourth interface of the third application on the back screen, where the fourth interface does not include a two-dimensional code, a first area of the fourth interface is a black background, and display content of a second area of the fourth interface is the same as display content of a corresponding area of the third interface.

In the foregoing solution, when the electronic device is in a folded state, if the electronic device receives a tap operation on the back screen performed by the user, the electronic device may first pull up the interface of the third application on the back screen. When the interface does not include a two-dimensional code, the electronic device removes the mask from the interface and displays the interface on the main screen, so that the user can find that displaying the two-dimensional code on the back screen fails.

In a possible implementation, after the first tap operation on the back screen is received, and before the second time point, the method may further include: displaying a first floating capsule on the main screen. The first floating capsule indicates that the two-dimensional code of the second application is being loaded on the back screen. For example, the floating capsule may include a piece of prompt information "Payment App 1|Payment code|Loading".

In the foregoing solution, according to the prompt information provided by the floating capsule, the user may know that the electronic device has responded to the tap operation of the user on the back screen and is attempting to pull up the payment code interface of the second application.

In a possible implementation, after the second interface of the second application is displayed on the back screen, and before the third time point, the method may further include: displaying a second floating capsule on the main screen, that is, updating the first floating capsule displayed on the main screen to the second floating capsule. The second floating capsule indicates that the two-dimensional code of the second application has been displayed on the back screen. For example, if the payment code interface of the Payment App 1 is successfully displayed on the back screen, the prompt information of the floating capsule may be updated from "Payment App 1|Payment code|Loading" to "Payment App 1|Payment Code|Displayed on the back screen".

In the foregoing solution, the prompt information of the floating capsule is updated, so that the user can learn that the two-dimensional code of the second application has been successfully pulled up on the back screen, and the user performs code scanning by aligning the back screen with a scanning device.

In a possible implementation, the second floating capsule may further include an expand control. After the first floating capsule displayed on the main screen is updated to the second floating capsule, the method may further include: receiving an operation on the expand control; and in response to the operation, displaying a plurality of two-dimensional code options on the main screen, where each two-dimensional code option corresponds to one two-dimensional code. For example, the user may trigger display of a drop-down list by performing an operation on the expand control, where the drop-down list includes a plurality of two-dimensional code options preset by the user, such as "Use Payment App 1 Passenger code" and "Use Payment App 2 Payment code".

In the foregoing solution, a plurality of two-dimensional code options are displayed on the main screen, so that the user can quickly update the two-dimensional code displayed on the back screen by operating a two-dimensional code option on the main screen without flipping the screen.

In a possible implementation, after the plurality of two-dimensional code options are displayed, the method may further include: receiving an operation on a first option in the plurality of two-dimensional code options, where the first option is corresponding to a two-dimensional code of a fourth application; and in response to the operation, displaying a fifth interface of the fourth application on the back screen, and displaying the first interface and a floating capsule on the main screen, where the fourth application has enabled a two-dimensional code function, the fifth interface includes a two-dimensional code, and the floating capsule indicates that the two-dimensional code of the fourth application has been displayed on the back screen.

In the foregoing solution, when the user operates a two-dimensional code option corresponding to an application on the main screen, if the application has enabled a two-dimensional code function, the two-dimensional code displayed on the back screen can be quickly updated, and the user is prompted, by using a floating capsule on the main screen, that the two-dimensional code has been successfully updated.

In a possible implementation, after the plurality of two-dimensional code options are displayed, the method may further include: receiving an operation on a second option in the plurality of two-dimensional code options, where the second option is corresponding to a two-dimensional code of a fifth application; and in response to the operation, displaying a sixth interface of the fifth application on the main screen, where the fifth application has not enabled a second-dimensional code function, and the sixth interface does not include a second-dimensional code.

In the foregoing solution, when the user operates a two-dimensional code option corresponding to an application on the main screen, if the application does not enable a two-dimensional code function, an interface that does not include a two-dimensional code may be pulled up on the main screen (for example, a two-dimensional code enabling interface), thereby facilitating the user to enable the two-dimensional code.

In a possible implementation, after the second tap operation on the back screen is received, and before the fourth time point, the method may further include: displaying a third floating capsule on the main screen, where the third floating capsule indicates that a two-dimensional code of the third application is being loaded on the back screen. The third floating capsule is not displayed at the fourth time point.

In the foregoing solution, after the third time point, when the electronic device attempts to pull up the two-dimensional code interface of the third application in response to the user's tap operation on the back screen, the electronic device may prompt the user by using the third floating capsule, so that the user learns that the electronic device is already attempting to pull up the payment code interface of the third application. In addition, if the third application does not enable the two-dimensional code function, the electronic device may cancel displaying the third floating capsule on the main screen, and pull up an interface for enabling the two-dimensional code function to the main screen.

In a possible implementation, after the first tap operation performed by the user on the back screen is received, the method may further include: registering with a first listener; obtaining an interface screenshot of the second application when the first listener detects that a life cycle of the second application changes or a window state of the second application is refreshed; and identifying that the interface screenshot of the second application includes a two-dimensional code. It should be understood that, based on identifying that the interface screenshot of the second application includes a two-dimensional code, the second interface includes the two-dimensional code of the second application.

For example, the first listener may be a first activity listener ActivityNotifer, and the first activity listener ActivityNotifer may be configured to monitor whether a life cycle of an activity changes. Correspondingly, the interface screenshot of the second application may be an interface screenshot of the second application that has been sent to the back screen for displaying. If the electronic device successfully pulls up the two-dimensional code on the back screen, that is, the interface screenshot of the second application is a screenshot of the second interface displayed on the back screen, a covered area of the second interface is a black background, and an uncovered area of the second interface is the two-dimensional code of the second application.

For another example, the first listener may be a first window listener WindowStateChangedListener, and the first window listener WindowStateChangedListener may be configured to monitor a window state change of the second application. It should be noted that the "window" herein refers to a view (view) of an application; and "window state refresh" refers to updating a view of an application in the background, but the view has not been displayed on the back screen. Correspondingly, the interface screenshot of the second application is a screenshot of a view of the second application, and the view of the second application is a layer that has not been displayed on the back screen. If the screenshot of the view of the second application includes a two-dimensional code (that is, the two-dimensional code function is enabled in the second application), the second interface of the second application is displayed on the back screen, and the second interface includes the two-dimensional code of the second application.

In a possible implementation, after the first listener is registered with, and before the second time point, the method may further include: combining the view of the second application and a mask view to obtain the second interface; and sending the second interface to the back screen for displaying. A third area of the mask view is a black background, a fourth area of the mask view is transparent, an area corresponding to the third area in the second interface is a black background, and an area corresponding to the fourth area in the second interface is the two-dimensional code of the second application.

In the foregoing solution, an area other than the area in which a two-dimensional code is located is set to a dark background image, which helps a scanning device quickly identify the two-dimensional code when the user aligns the two-dimensional code with the scanning device, thereby improving a code identification success rate.

In a possible implementation, after the first tap operation on the back screen is received, the method may further include: starting timing; before timing duration reaches preset duration, identifying that the interface screenshot of the second application includes a two-dimensional code; stopping timing; and deregistering the first listener.

In the foregoing solution, after the tap operation performed by the user on the back screen is received, if a two-dimensional code is identified within preset duration, it indicates that display of the two-dimensional code on the back screen succeeds, and it is no longer required to monitor whether the two-dimensional code is successfully displayed, so that the first listener may be deregistered.

In a possible implementation, after the second tap operation performed by the user on the back screen is received, the method may further include: registering with a second listener; when the second listener detects that a life cycle of the third application changes, or a window state of the third application is refreshed, obtaining an interface screenshot of the third application; and identifying that the interface screenshot of the third application does not include a two-dimensional code. It should be understood that, based on identifying that the interface screenshot of the third application does not include a two-dimensional code, the third interface does not include the two-dimensional code of the third application.

For example, the second listener may be a second activity listener ActivityNotifer, and the second activity listener ActivityNotifer is configured to monitor a life cycle change of the third application; the interface screenshot of the third application is a screenshot of the fourth interface of the third application that has been sent to the back screen for displaying; and the fourth interface does not include a two-dimensional code, the first area of the fourth interface is a black background, and display content of the second area of the fourth interface is the same as display content of the corresponding area of the third interface.

For another example, the second listener may be a second window listener WindowStateChangedListener, and the second window listener WindowStateChangedListener is configured to monitor a window state change of the third application. The interface screenshot of the third application is a screenshot of a view of the third application, and the view of the third application is a view that has not been displayed on the back screen.

In a possible implementation, after the second tap operation on the back screen is received, the method may further include: starting timing; and when timing duration reaches preset duration and a two-dimensional code is not identified from the interface screenshot of the third application, stopping timing, and deregistering the second listener.

In the foregoing solution, after the tap operation performed by the user on the back screen is received, if no two-dimensional code is identified within a relatively long period of time, it indicates that displaying the two-dimensional code on the back screen fails, and whether the two-dimensional code is successfully displayed does not need to be monitored, so that the second listener may be deregistered.

In a possible implementation, before the third time point, the method may further include: receiving a selection operation on the third application; and in response to the selection operation, setting the third application to an application that displays a two-dimensional code by default on the back screen.

In the foregoing solution, in a case in which a Quick code display service is enabled on the electronic device, the user may manually change an application that displays a two-dimensional code by default on the back screen, so that the user can trigger, by tapping on the back screen, the electronic device to pull up a two-dimensional code of the default application on the back screen.

In a possible implementation, the third interface may include a control that enables the two-dimensional code function, and the control is used to trigger the third application to enable the two-dimensional code function. After the third interface of the third application is displayed on the main screen, the method may further include: receiving an operation on the control for enabling the two-dimensional code function, and displaying a seventh interface of the third application on the main screen, where the seventh interface includes a two-dimensional code.

In the foregoing solution, when the electronic device displays, on the main screen, an interface that does not include a two-dimensional code (for example, the two-dimensional code enabling interface), the user may trigger display of the two-dimensional code on the main screen by using an operation of enabling a control in the payment application on the main screen, for example, an operation of authorizing the payment application to enable a payment code, so that the two-dimensional code can be used for scanning, thereby improving user experience.

In a possible implementation, after the seventh interface of the third application is displayed on the main screen at the fourth time point, the method may further include: displaying the first interface on the main screen at the fifth time point; receiving a third tap operation on the back screen, and displaying an eighth interface of the third application on the back screen at a sixth time point, where the eighth interface includes a two-dimensional code; and when the seventh interface of the third application is displayed on the back screen, displaying the first interface on the main screen, where between the fifth time point and the sixth time point, the electronic device is in a folded state, the third application is an application that displays a two-dimensional code by default on the back screen, and the third application has enabled a two-dimensional code function.

In the foregoing solution, after the user enables the two-dimensional code function for the third application, if the electronic device is in a folded state, the user may pull up the two-dimensional code of the third application on the back screen at any time by performing a tap operation on the back screen.

According to a second aspect, this application provides an apparatus. The apparatus includes a unit configured to perform the method in the first aspect. The apparatus may correspondingly perform the two-dimensional code display method described in the first aspect. For related descriptions of the unit in the apparatus, refer to the descriptions in the first aspect. For brevity, details are not described herein again.

The method described in the first aspect may be implemented by hardware, or may be implemented by executing corresponding software by hardware. The hardware or the software includes one or more modules or units corresponding to the foregoing functions, for example, a processing module or unit or a display module or unit.

According to a third aspect, this application provides an electronic device. The electronic device includes a memory and one or more processors. The memory is configured to store computer program code. The computer program code includes computer instructions. When the computer instructions are invoked by the processor, the electronic device is enabled to perform the two-dimensional code display method provided in any implementation of the first aspect.

According to a fourth aspect, this application provides a computer-readable storage medium. The computer-readable storage medium includes computer instructions. When the computer instructions are run on an electronic device, the electronic device is enabled to perform the two-dimensional code display method provided in any one of the first aspect and the possible implementations of the first aspect.

According to a fifth aspect, this application provides a computer program product. When the computer program product runs on a computer, the computer is enabled to perform the two-dimensional code display method provided in any one of the first aspect and the possible implementations of the first aspect.

According to a sixth aspect, this application provides a chip. The chip is coupled to a memory, and the chip is configured to read and execute a computer program stored in the memory, to implement the two-dimensional code display method provided in any implementation of the first aspect.

According to a seventh aspect, this application provides a chip system. The chip system includes one or more interface circuits and one or more processors. The interface circuit and the processor are connected through a line. The chip system may be applied to an electronic device including a communication module and a memory. The interface circuit is configured to: receive a signal from the memory of the electronic device, and send the received signal to the processor, where the signal includes computer instructions stored in the memory. When the processor invokes the computer instructions, the electronic device may execute the two-dimensional code display method provided in any implementation of the first aspect.

It may be understood that, for beneficial effects that can be achieved by the apparatus according to the second aspect, the electronic device according to the third aspect, the computer-readable storage medium according to the fourth aspect, the computer program product according to the fifth aspect, the chip according to the sixth aspect, and the chip system according to the seventh aspect provided above, reference may be made to the beneficial effects in any one of the first aspect and the possible implementations of the first aspect. Details are not described herein again.

### BRIEF DESCRIPTION OF DRAWINGS

FIG. 1A to FIG. 1D are schematic diagrams of an outward foldable phone according to an embodiment of this application;
FIG. 2A(1) to FIG. 2G(4) are schematic diagrams of a scenario in which a two-dimensional code is successfully displayed on a back screen according to an embodiment of this application;
FIG. 3A(1) to FIG. 3D(3) are schematic diagrams of a scenario in which a two-dimensional code is not successfully displayed on a back screen according to an embodiment of this application;
FIG. 4 is a schematic diagram of a hardware structure of a foldable-screen device according to an embodiment of this application;
FIG. 5 is a schematic diagram of an architecture of a foldable-screen device according to an embodiment of this application;
FIG. 6 is a schematic flowchart of a method for identifying whether a two-dimensional code is displayed on a back screen according to an embodiment of this application;
FIG. 7 is a schematic diagram of providing an ACC sensor on a back screen according to an embodiment of this application;
FIG. 8 is a schematic diagram of receiving a TapTap operation according to an embodiment of this application;
FIG. 9A to FIG. 9C are a schematic flowchart of another method for identifying whether a two-dimensional code is displayed on a back screen according to an embodiment of this application;
FIG. 10A to FIG. 10E are a schematic diagram of a scenario in which a two-dimensional code is identified from a screenshot on a back screen according to an embodiment of this application;
FIG. 11A to FIG. 11E are a schematic diagram of a scenario in which no two-dimensional code is identified from a screenshot on a back screen according to an embodiment of this application;
FIG. 12A to FIG. 12C are a schematic flowchart of still another method for identifying whether a two-dimensional code is displayed on a back screen according to an embodiment of this application;
FIG. 13A to FIG. 13C are a schematic diagram of a scenario in which a two-dimensional code is identified from a screenshot of a collection/payment view according to an embodiment of this application;
FIG. 14A to FIG. 14C are a schematic diagram of a scenario in which no two-dimensional code is identified from a screenshot of a payment code enabling view according to an embodiment of this application; and
FIG. 15A to FIG. 15C are a schematic diagram of payment code enabling according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Clearly, the described embodiments are some rather than all of embodiments of this application.

In the descriptions of this application, unless otherwise specified, "/" means "or". For example, A/B may represent A or B. In the descriptions of this application, the term "and/or" is merely used to describe an association relationship between associated objects, and represents that three relationships may exist. For example, A and/or B may represent the following three cases: Only A exists, both A and B exist, and only B exists.

In the specification and the claims of this application, the terms "first", "second", and the like are intended to distinguish between different objects or distinguish between different processing on a same object, and are not used to describe a specific sequence of the objects. For example, a first frame and a second frame are used to distinguish between different video frames, but are not intended to indicate a particular order of the video frames. In embodiments of this application, "a plurality of' means two or more.

When a foldable-screen device is in a folded state, a main screen faces a user, a back screen faces away from the user, and the foldable-screen device is similar to a bar phone. In this case, the user uses only the main screen, and does not pay attention to the back screen, resulting in that the back screen is in an idle state.

To resolve the foregoing problem, an embodiment of this application provides a two-dimensional code display method. The method may be applied to an electronic device (such as a foldable-screen device) on which a main screen and a back screen are disposed. When a display screen of the foldable-screen device is in a folded state, a main screen faces a user, and a back screen faces away from the user. If the user wants to use a two-dimensional code, such as a payment code, a collection code, a passenger code, or a health code, the user may tap the back screen, to trigger the back screen to display a two-dimensional code interface. In this way, the user can trigger quick display of the two-dimensional code on the back screen without a need to flip the back screen toward the user, and use the two-dimensional code for scanning, thereby improving utilization of the back screen, and improving user experience.

It should be noted that "the main screen faces the user" means that a side of the main screen used to display content is facing the user, and the user can see the content displayed on the main screen; and "the back screen faces away from the user" means that a side of the back screen used to display content is facing away from the user, and the user cannot see the content displayed on the back screen.

The foldable-screen device may be an inward foldable device, or may be an outward foldable device. Both the inward foldable device and the outward foldable device may be folded into three forms: a folded state, a hovering state, and an unfolded state. When the foldable-screen device is in the folded state, a folding angle between the main screen and the back screen is less than or equal to α, that is, the main screen and the back screen are oriented in opposite directions, for example, the main screen faces the user and the back screen faces away from the user. When the foldable-screen device is in the unfolded state, a folding angle between the main screen and the back screen is greater than or equal to β, and the main screen and the back screen are oriented in a same direction, for example, both the main screen and the back screen face the user. When the foldable-screen device is in the hovering state, a folding angle between the main screen and the back screen is greater than α and less than β. For example, α is equal to or close to a folding angle of 0°, and β is equal to or close to a folding angle of 180°.

For example, the foldable-screen device may be an outward foldable phone or an inward foldable phone.

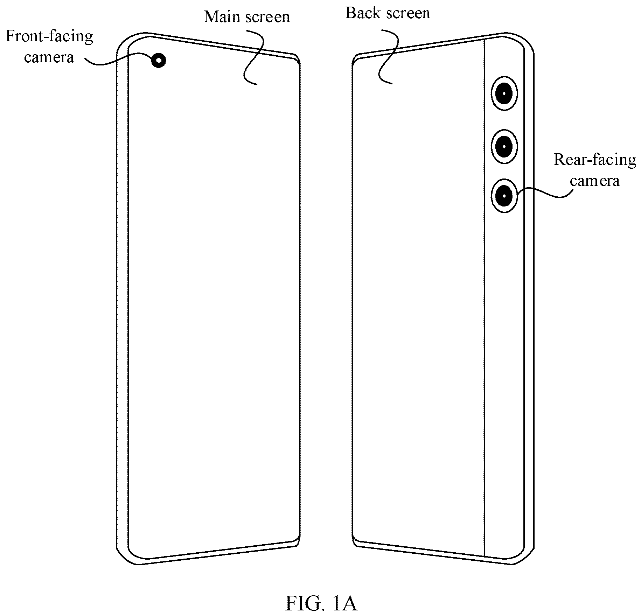

An example in which the foldable-screen device is an outward foldable phone is used. FIG. 1A to FIG. 1D are schematic diagrams of an outward foldable phone.

FIG. 1A is a schematic diagram of an outward foldable phone in a folded state. When the outward foldable phone is in the folded state, a back screen is folded to be flush with a rear-facing camera, a main screen faces a user, and the back screen faces away from the user. In this case, the user's attention is mainly focused on the main screen, and content displayed on the back screen cannot be paid attention to in a timely manner.

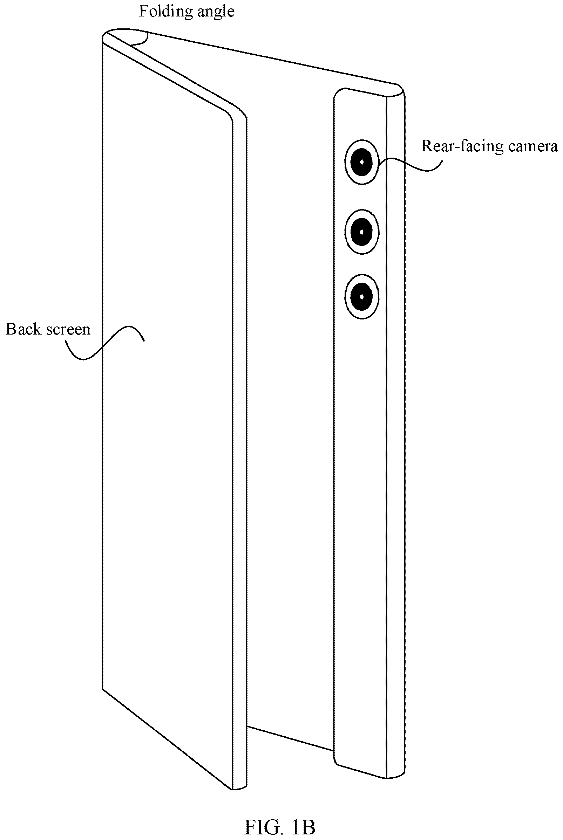

FIG. 1B is a schematic diagram of the outward foldable phone in a hovering state. When the outward foldable phone is in the hovering state, a folding angle between the main screen and the back screen is greater than 0° and less than 180°.

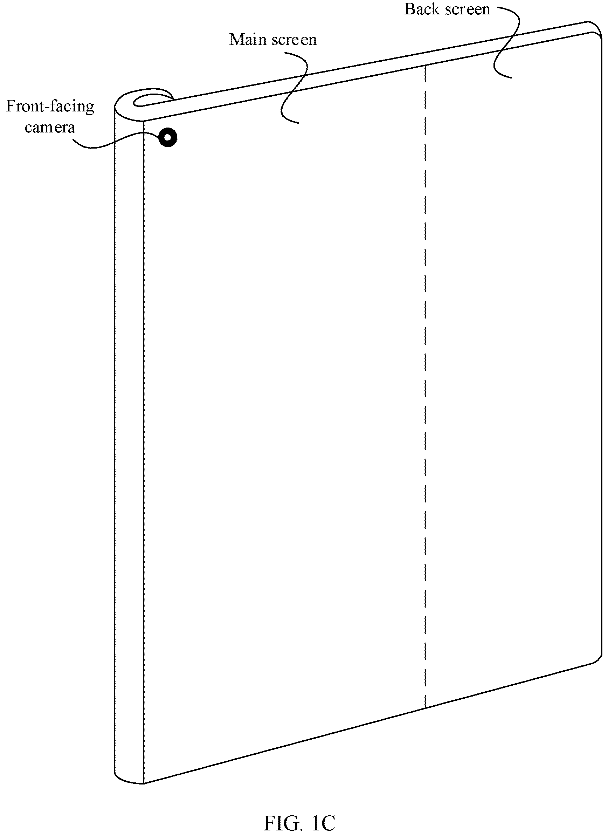

FIG. 1C is a schematic diagram of the outward foldable phone in an unfolded state. When the outward foldable phone is in the unfolded state, the main screen and the back screen are on a same plane.

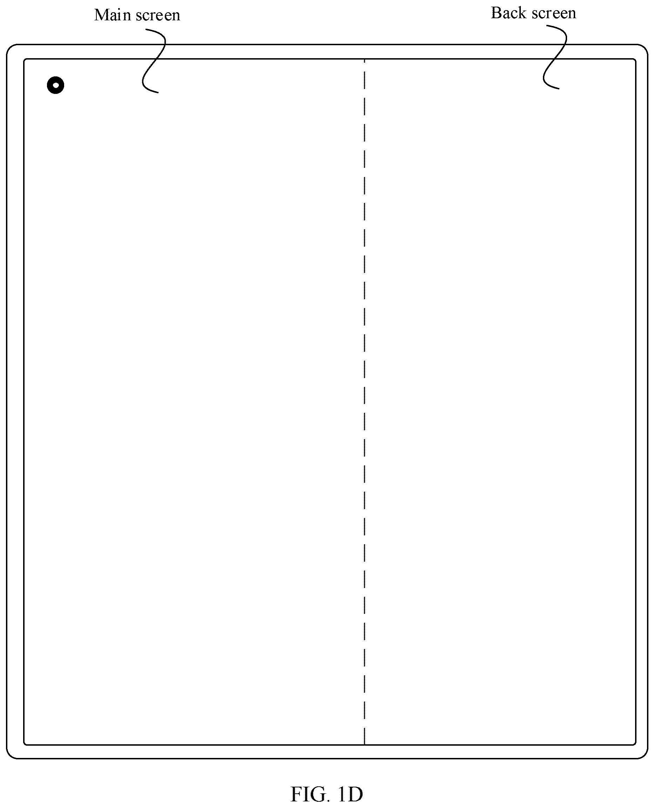

The main screen and the back screen in FIG. 1A, FIG. 1B, and FIG. 1C are essentially two display areas of a same screen. As shown in FIG. 1D, a hinge is disposed behind a display area corresponding to the main screen and a display area corresponding to the back screen. When the user holds the outward foldable phone with both hands and folds the phone along the hinge, a status of the outward foldable phone can be changed. For example, the phone is first switched from the unfolded state shown in FIG. 1C to the hovering state shown in FIG. 1B, and then switched from the hovering state shown in FIG. 1B to the folded state shown in FIG. 1A.

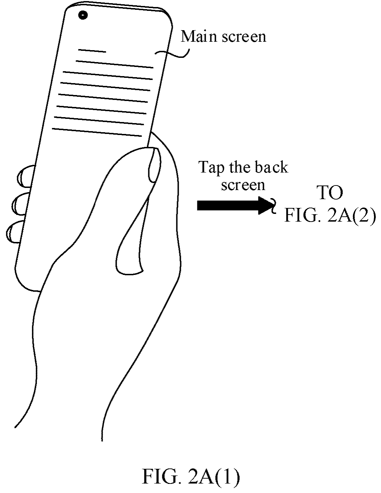

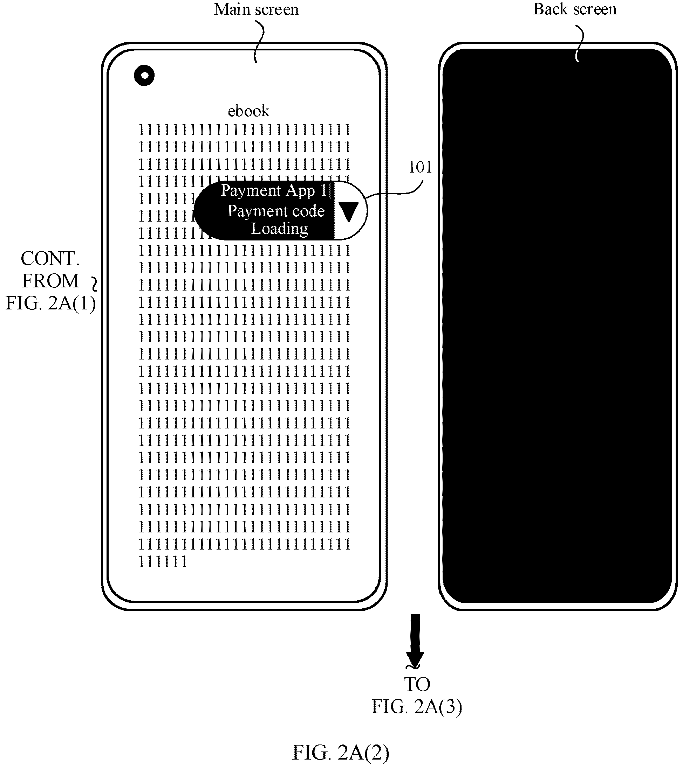

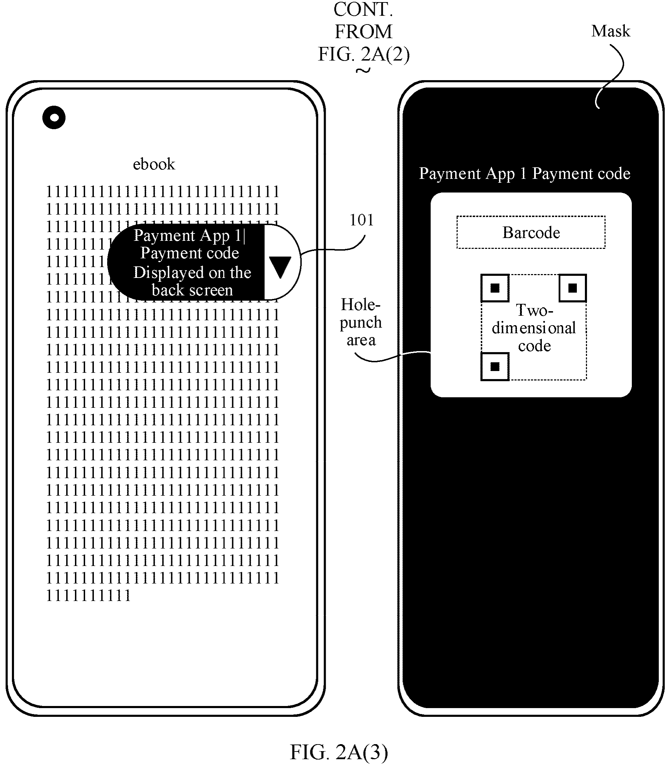

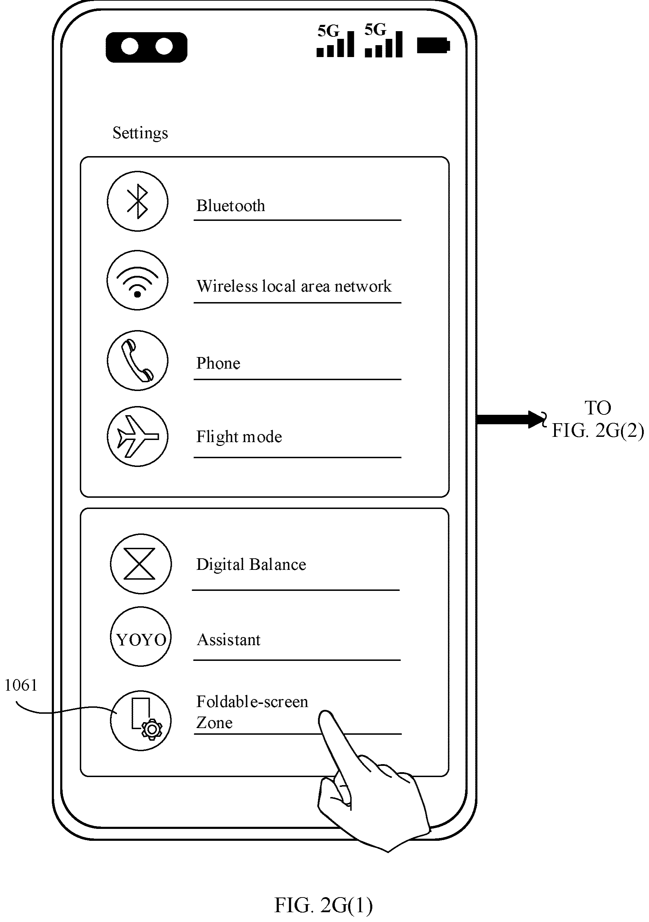

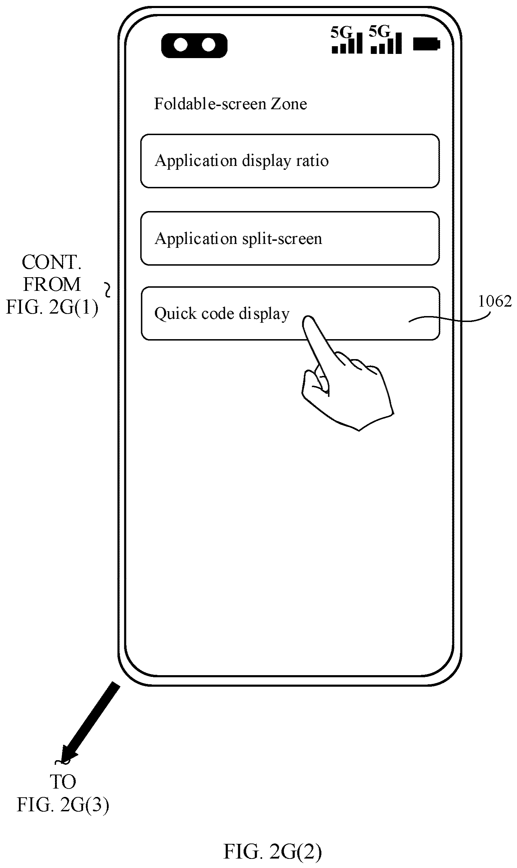

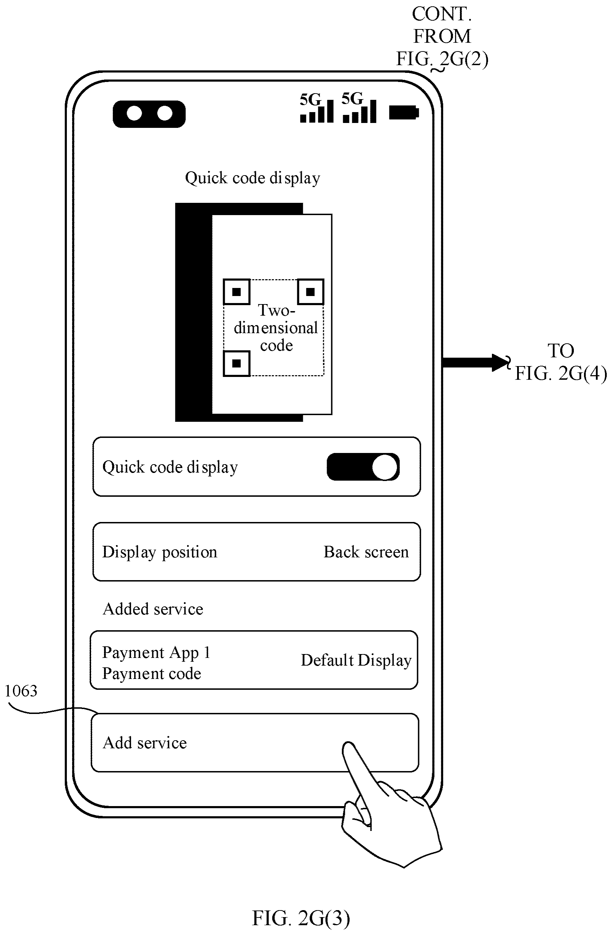

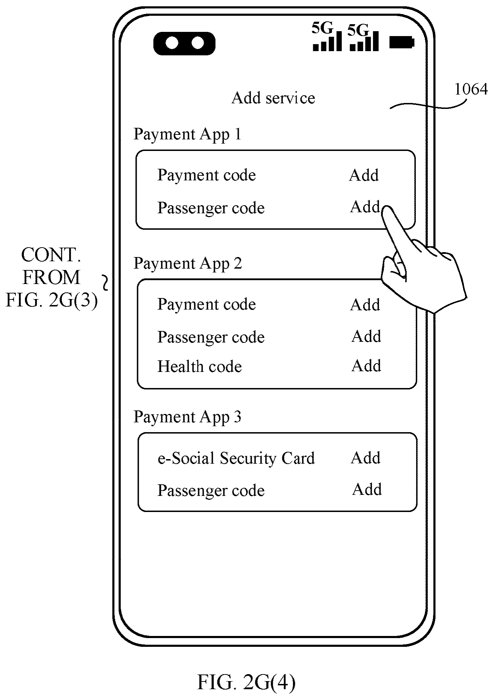

On the basis of the outward foldable phone shown in FIG. 1A to FIG. 1D, with reference to FIG. 2A(1) to FIG. 2G(4), the following uses an example to describe an application scenario in which a two-dimensional code is successfully displayed on a back screen according to this application.

In an example, as shown in FIG. 2A(1), at an initial moment, a user holds an outward foldable phone in a folded state with one hand, a main screen faces the user, and a back screen faces away from the user. If the main screen is displaying the e-book, the user may use a thumb to swipe on the main screen to browse the e-book. In the folded state, the back screen does not respond to a touch operation of the user. If the user needs to perform code scanning, such as paying with a payment code, receiving money with a collection code, or taking a ride with a passenger code, the user can use the index finger or middle finger to tap the back screen twice in succession (that is, double-tap the back screen). In response to the tap operation, the outward foldable phone displays a floating capsule 101 on the main screen. The floating capsule 101 may include two areas: One area displays prompt information "Payment App 1|Payment code|Loading", and the user may know, by using the prompt information, that the outward foldable phone is trying to pull up a payment code interface of the Payment App 1; and the other area displays an expand control with a triangle, and the user can trigger display of a drop-down list by operating the expand control.

If the outward foldable phone successfully displays the payment code interface of the Payment App 1 on the back screen, the outward foldable phone may update the prompt information of the floating capsule 101, for example, from "Payment App 1|Payment code|Loading" to "Payment App 1|Payment code|Displayed on the back screen". The payment code interface displayed on the back screen includes two parts: One part is a dark background image, such as a black mask (presentation); and the other part is a hole-punch area, where the hole-punch area displays a two-dimensional code, or the hole-punch area displays a two-dimensional code and a barcode. It should be understood that an area other than the area in which a two-dimensional code is located is set to a dark background image, which helps a scanning device quickly identify the two-dimensional code when the user aligns the two-dimensional code with the scanning device, thereby improving a code identification success rate. In addition, the dark background image may further include words "Payment App 1 Payment code", and the words may be used to indicate an application that provides the two-dimensional code and a type of the two-dimensional code. In an example, the outward foldable phone may change the words in the dark background image according to an application that provides a two-dimensional code and a type of the two-dimensional code. For example, the words in the dark background image may also be "Payment App 1 Passenger code", "Payment App 1 Collection code", "Payment App 2 Passenger code", and "Payment App 2 Collection/Payment code".

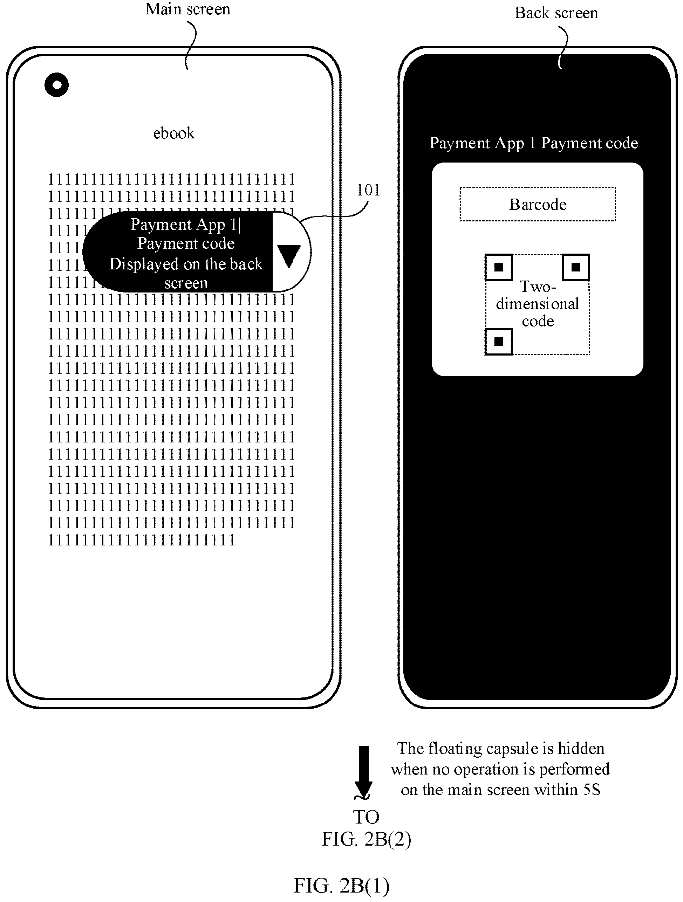

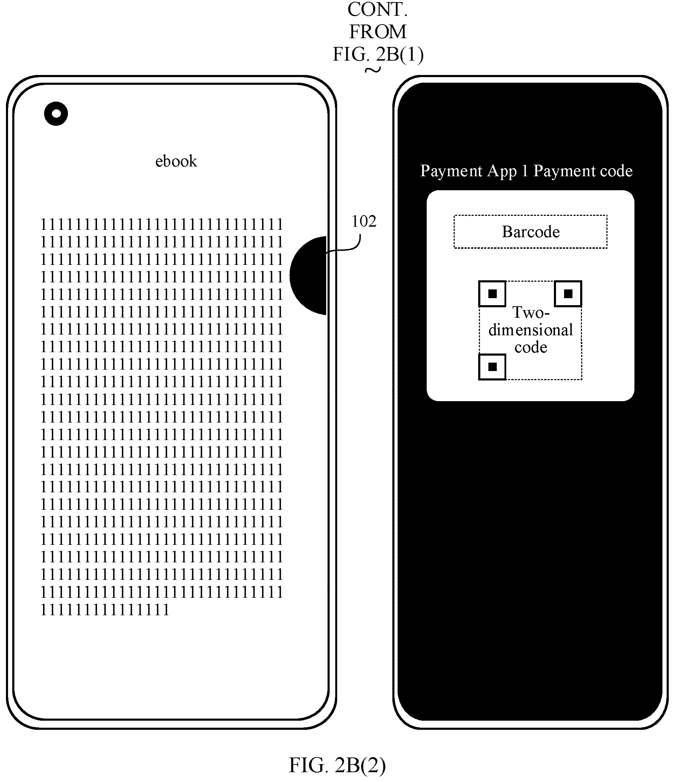

In another example, the outward foldable phone may further change a display form of the floating capsule 101. As shown in FIG. 2A(3), the display form of the floating capsule 101 displayed on the main screen is similar to a capsule, and is referred to as a capsule state. After the floating capsule 101 shown in FIG. 2A(3) is displayed, the outward foldable phone starts timing. When duration of the timing reaches preset duration (for example, 5s), if no touch operation performed by the user on the main screen is received, the floating capsule 101 is updated from the capsule state shown in FIG. 2A(3) to a hidden state 102 shown in FIG. 2B(2). The hidden state may be a half circle, which is displayed near a screen edge. It should be understood that updating from the capsule state to the hidden state can avoid blocking the interface of the main screen and affecting the user's normal browsing of the e-book. In addition, if the main screen does not receive a user operation within the timing duration, and the timing duration reaches preset duration, the back screen may keep displaying the payment code interface. It should be understood that the user may further tap the floating capsule in the hidden state shown in FIG. 2B(2), to switch the floating capsule to the capsule state shown in FIG. 2A(3) again.

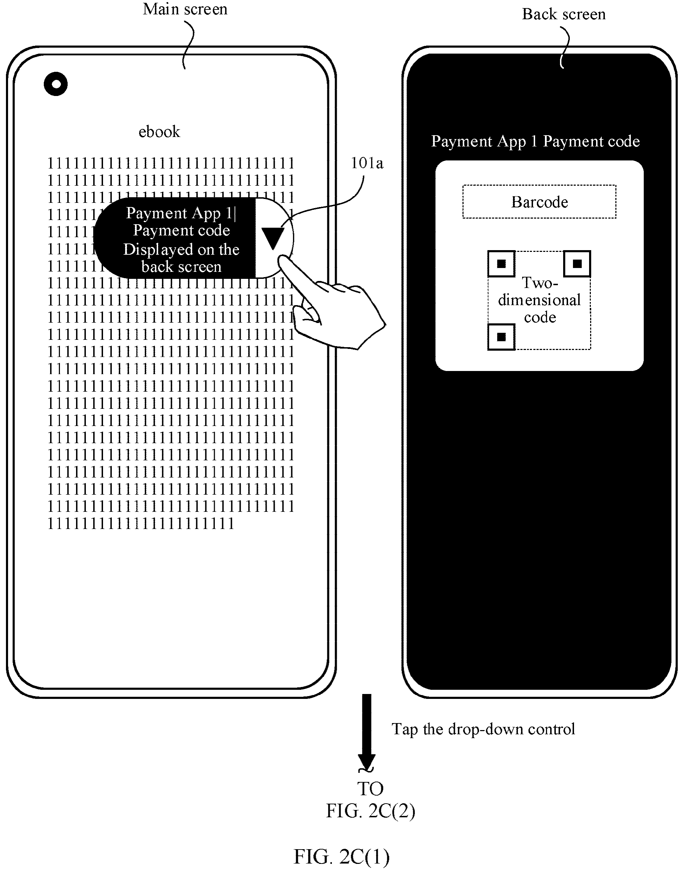

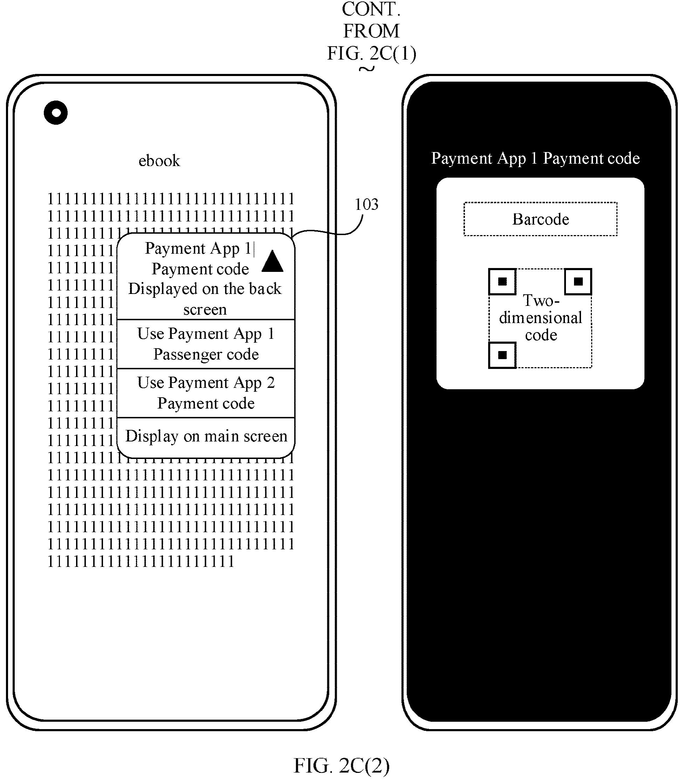

In still another example, on the basis of the floating capsule 101 shown in FIG. 2A(3), as shown in FIG. 2C(1), the user may trigger display of the drop-down list 103 by performing an operation on the expand control 101a. The drop-down list 103 may include another two-dimensional code option, such as "Use Payment App 1 Passenger code" and "Use Payment App 2 Payment code". In addition, the drop-down list 103 may further include a "Display on main screen" option.

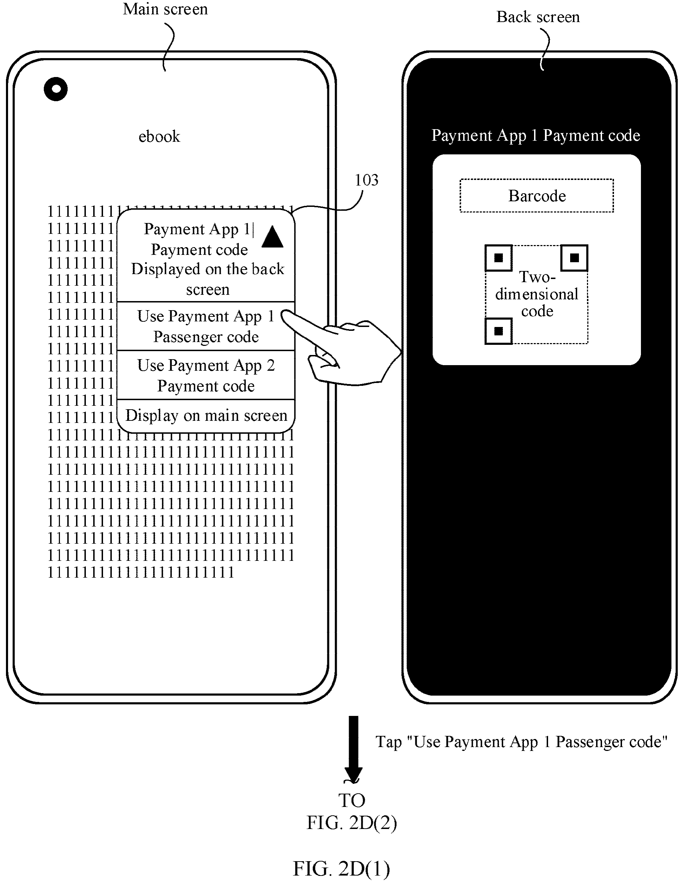

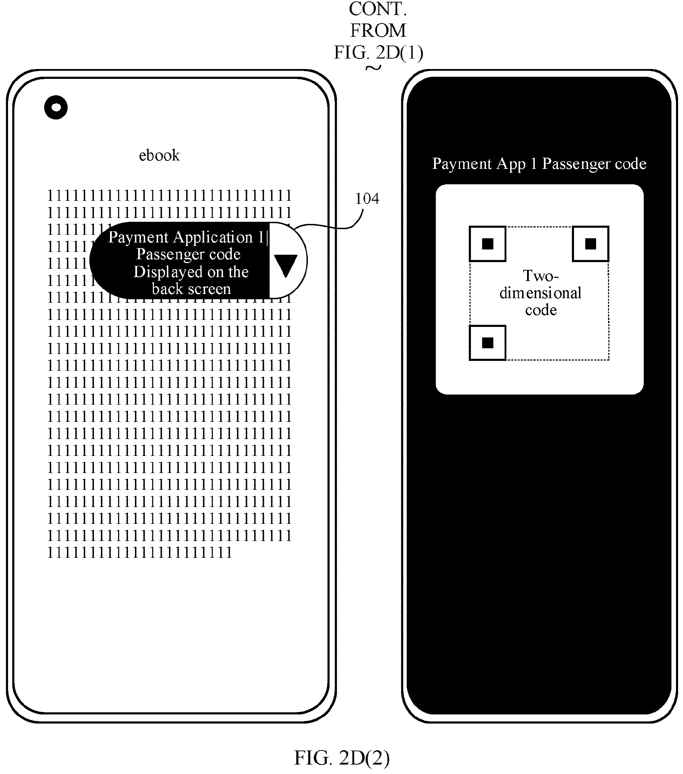

If the payment code displayed on the back screen does not meet a user requirement, the user may further change the two-dimensional code displayed on the back screen. For example, on the basis of the drop-down list 103 shown in FIG. 2C(2), as shown in FIG. 2D(1), the user may tap "Use Payment App 1 Passenger code", and the outward foldable phone updates the payment code of the Payment App 1 displayed on the back screen to the passenger code of the Payment App 1, and displays an updated floating capsule 104 on the main screen. Prompt information of the updated floating capsule 104 is "Payment App 1|Passenger code|Displayed on the back screen".

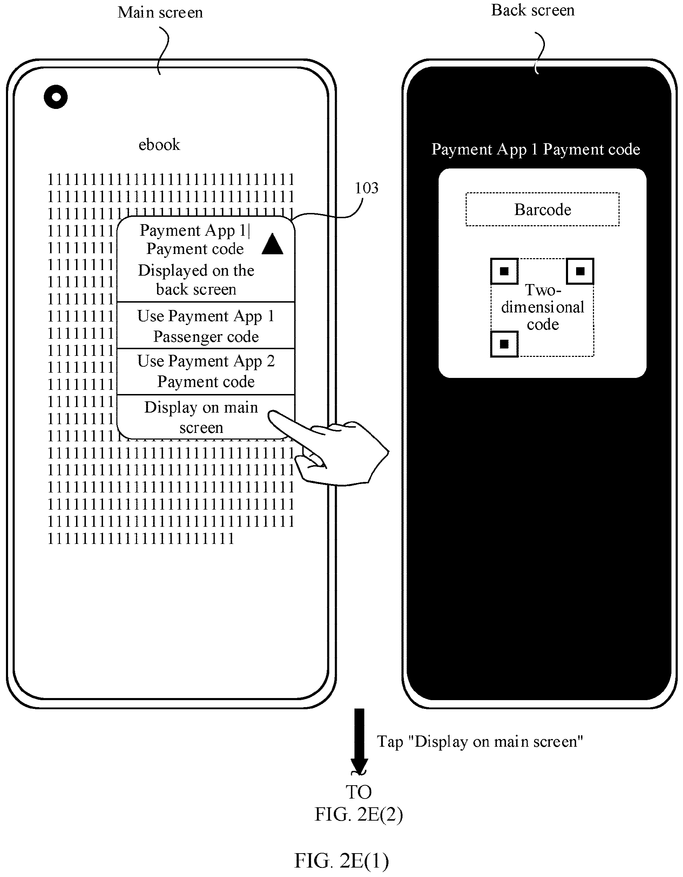

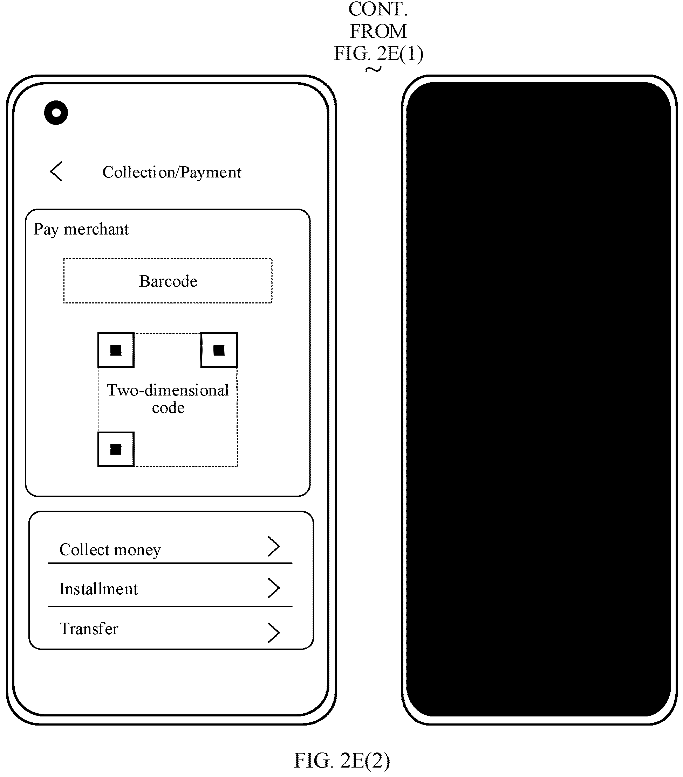

In addition, the user may need to switch the payment code interface to the main screen. For example, on the basis of the drop-down list 103 shown in FIG. 2C(2), as shown in FIG. 2E(1), the user may tap the "Display on the main screen" option, so that the outward foldable phone pulls the payment code interface displayed on the back screen to the main screen, and turns off the back screen.

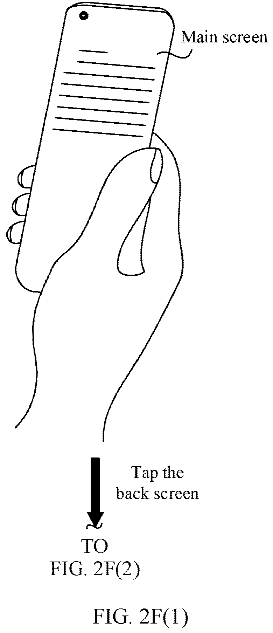

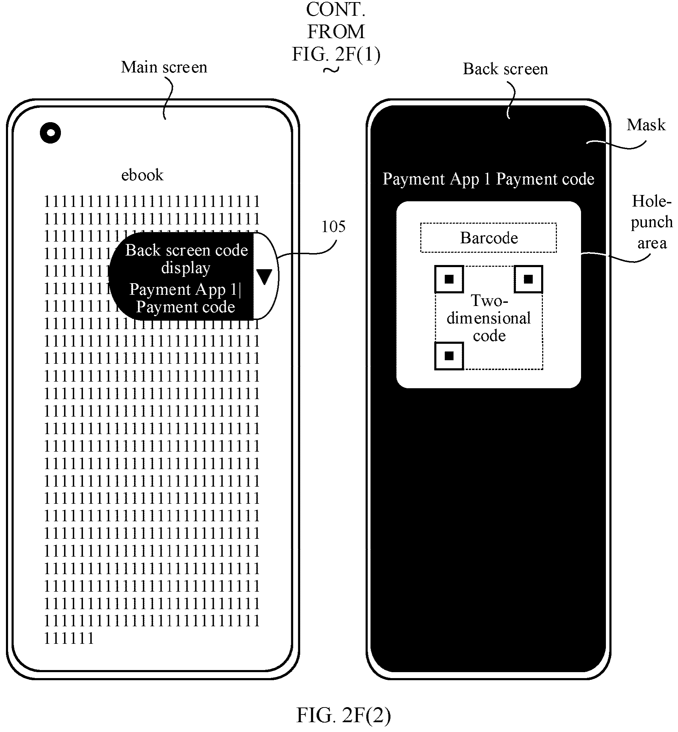

In the descriptions of the foregoing embodiments for FIG. 2A(1) to FIG. 2E(2), the foldable-screen device first pops up, on the main screen, the floating capsule of "Payment App 1|Payment code|Loading", and when the two-dimensional code is successfully displayed on the back screen, updates the prompt information of the floating capsule 101 to "Payment App 1|Payment code|Displayed on the back screen". An embodiment of this application further provides another method for displaying a floating capsule. As shown in FIG. 2F(1) and FIG. 2F(2), after the user continuously taps the back screen two times with an index finger or a middle finger, the outward foldable phone displays a two-dimensional code interface on the back screen in response to the tap operation, and a floating capsule 105 "Payment App 1|Payment code|Displayed on the back screen" pops up on the main screen. That is, before the back screen pulls up the two-dimensional code interface, the outward foldable phone does not pop up, on the main screen, the floating capsule of "Payment App 1|Payment code|Loading".

In still another example, FIG. 2G(1) to FIG. 2G(4) show a schematic diagram of an operation of enabling a quick code display service (also referred to as a TapTap service). The user can tap the "Foldable screen area" option 1061 on the setting interface to trigger the outward foldable phone to display the foldable screen area interface. Then, the user may tap the "Quick code display" option 1062 in the foldable screen area interface to trigger the outward foldable phone to display a quick code display interface. The quick code display interface may include a Quick code display option, a Display position option, an Added service option, an Add service option 1063, and the like. The Quick Code Display option may be used to trigger the outward foldable phone to enable the quick code display service. The Display position option may be used to set a screen for displaying a two-dimensional code, such as the back screen. The Added service option includes a two-dimensional code displayed by default on the back screen when the quick code display service is pulled up. Certainly, the user may manually change the two-dimensional code displayed by default on the back screen, or manually change an application that displays the two-dimensional code by default on the back screen. The Add service option is used to add a two-dimensional code. The user may further tap the Add Service option 1063 to trigger the outward foldable phone to display an Add service interface 1064, where the Add service interface 1064 provides a plurality of payment applications installed in the outward foldable phone and two-dimensional codes supported by each payment application. Then, the user may manually add one or more two-dimensional codes by performing an operation on the add control according to a usage requirement. These manually added two-dimensional codes are displayed in the drop-down list shown in FIG. 2C(2) when the Quick code display service is pulled up.

For example, when the user sets the Payment App 1 to an application that displays a two-dimensional code by default on the back screen, if the user performs a double-tap operation on the back screen, the electronic device attempts to pull up the two-dimensional code of the Payment App 1. For another example, when the user sets the payment code of the Payment App 1 to a two-dimensional code displayed by default on the back screen, if the user performs a double-tap operation on the back screen, the electronic device attempts to pull up the payment code of the Payment App 1. Certainly, the application that displays a two-dimensional code by default on the back screen or the two-dimensional code displayed by default on the back screen may alternatively be automatically set on the electronic device, for example, a passenger code of the electronic wallet is set to the two-dimensional code displayed by default on the back screen.

In the display methods provided in FIG. 2A(1) to FIG. 2G(4), the outward foldable phone may fail to display a two-dimensional code interface on the back screen due to a reason that the user has not authorized to enable a payment code function or the like. In a possible case, the floating capsule that has been displayed on the main screen is always kept as "Payment App 1|Payment code|Loading". In another possible case, the floating capsule is not displayed on the main screen. At this moment, the back screen is facing the user, and the user's attention is mainly focused on the main screen. Therefore, if the user does not turn the back screen toward the user, the user may not find in time that the two-dimensional code is not successfully displayed on the back screen. When the user aligns the back screen with a scanning device, scanning failure probably occurs.

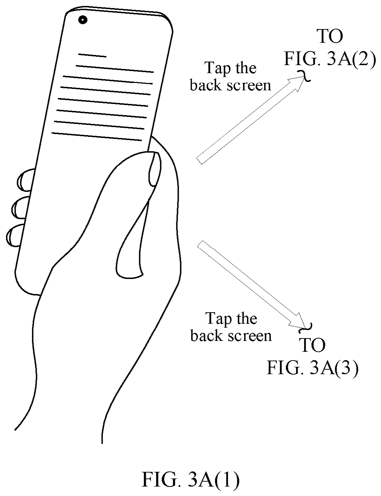

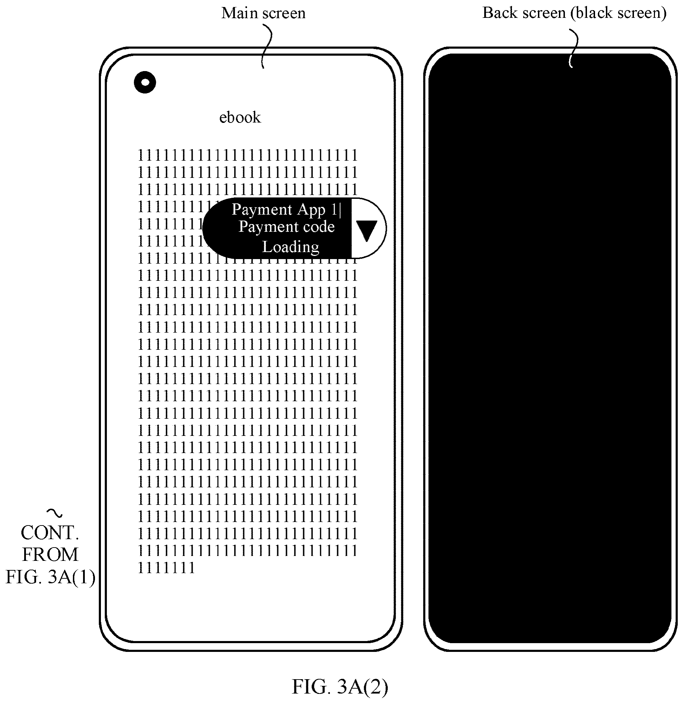

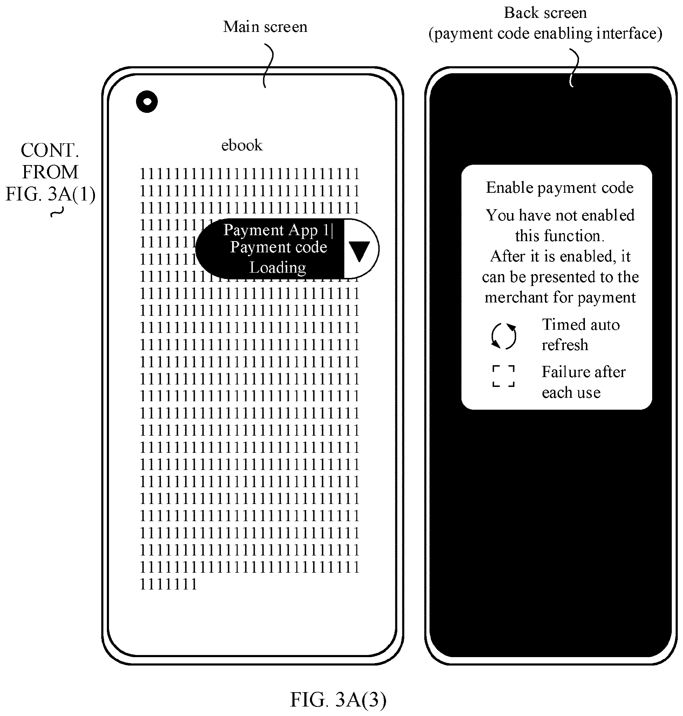

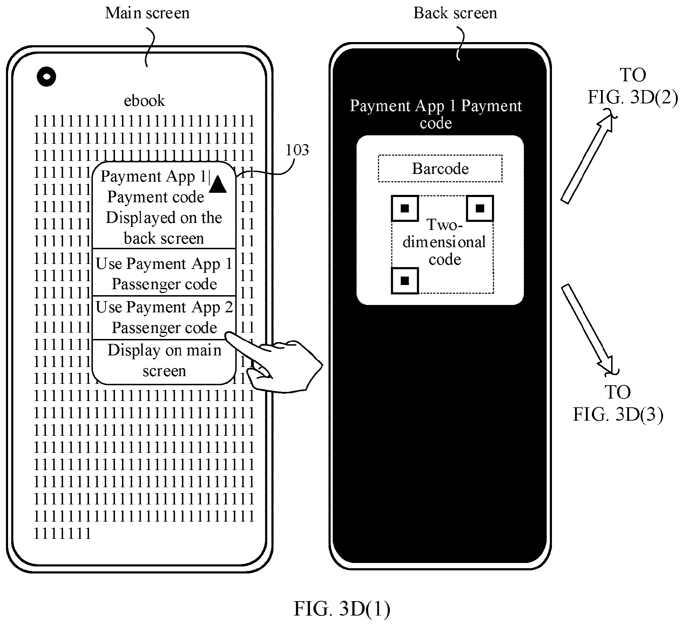

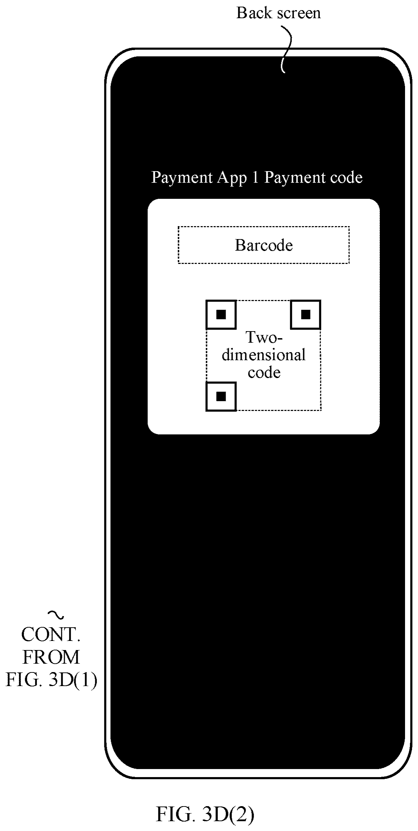

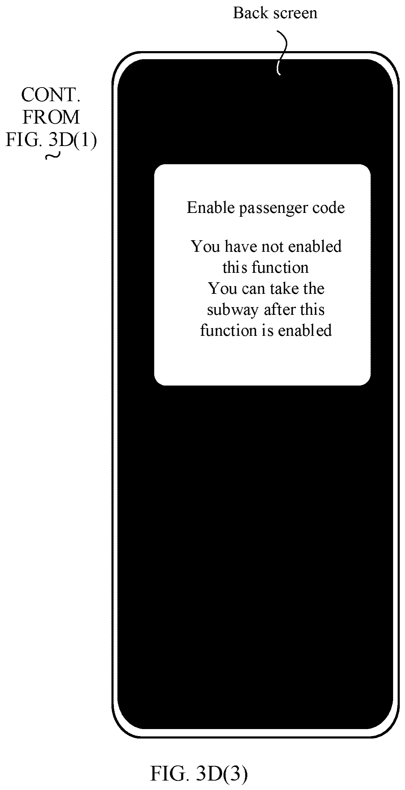

The following provides, with reference to FIG. 3A(1) to FIG. 3D(3), several scenarios in which the two-dimensional code is not successfully displayed on the back screen by using an example in which the floating capsule "Payment App 1|Payment code|Loading" pops up on the main screen of the outward foldable phone.

Example 1 of a scenario in which the two-dimensional code is not successfully displayed on the back screen:

As shown in FIG. 3A(1) to FIG. 3A(3), after the user continuously taps the back screen two times, the outward foldable phone detects that the user has not authorized to enable the two-dimensional code function, and therefore the two-dimensional code cannot be pulled up on the back screen. Specifically, in a case, a floating capsule "Payment App 1|Payment code|Loading" pops up on the main screen, and the back screen remains black, that is, the main screen changes, and the back screen does not change. In another case, a floating capsule "Payment App 1|Payment code|Loading" pops up on the main screen, and the back screen displays an interface that prompts the user to enable the payment code, that is, both the main screen and the back screen change.

It should be noted that this embodiment of this application relates to two concepts: "Two-dimensional code function enabled" and "Two-dimensional code function disabled". For ease of understanding, a conventional scenario of using a two-dimensional code is used as an example for description. When the user taps a two-dimensional code control (such as a travel control and a collection/payment control) of an application, if the user pre-authorizes the application to enable a two-dimensional code function, that is, the application has enabled the two-dimensional code function, the electronic device displays a two-dimensional code interface corresponding to the two-dimensional code control, and the two-dimensional code interface includes a two-dimensional code. If the user has not authorized the application to enable the two-dimensional code function, that is, the application does not enable the two-dimensional code function, the electronic device displays an interface that prompts the user to enable the two-dimensional code function. The user taps a control or an option that allows the two-dimensional code function to be enabled. The electronic device enables the two-dimensional code function, and displays the two-dimensional code interface corresponding to the two-dimensional code control.

Example 2 of a scenario in which the two-dimensional code is not successfully displayed on the back screen:

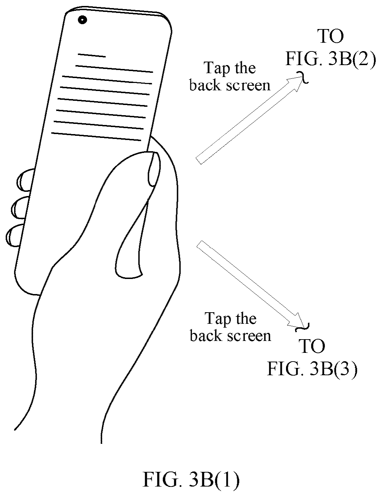

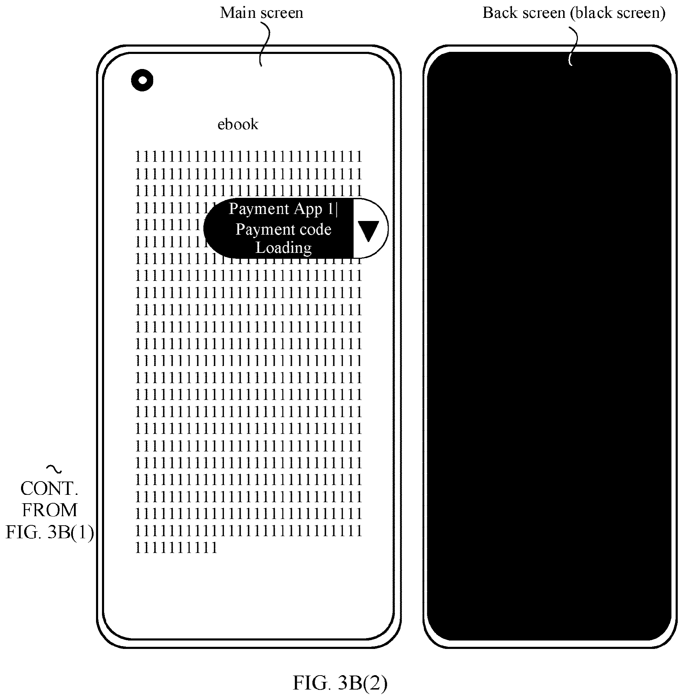

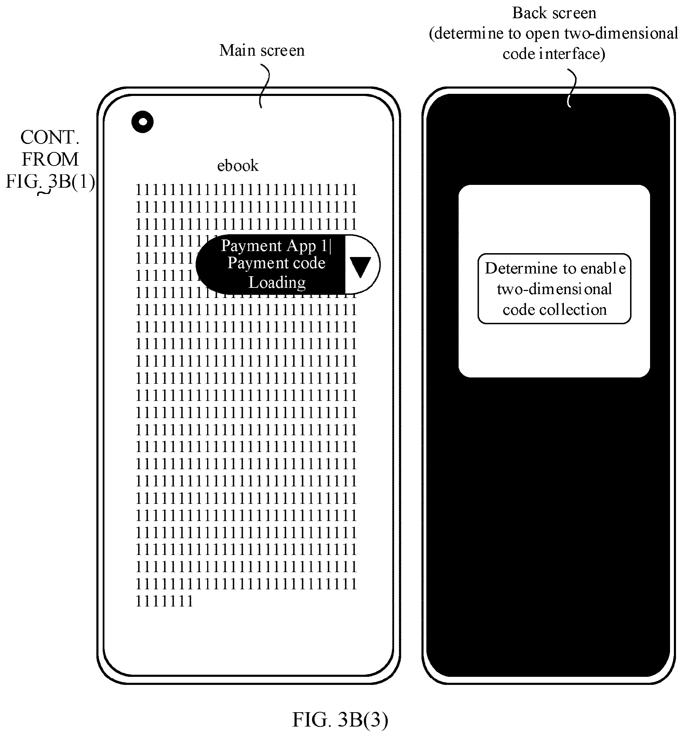

As shown in FIG. 3B(1) to FIG. 3B(3), after the user continuously taps the back screen two times, before the outward foldable phone detects that the two-dimensional code is displayed, the user needs to manually tap to confirm. Specifically, in a case, a floating capsule "Payment App 1|Payment code|Loading" pops up on the main screen, and the back screen remains black, that is, the main screen changes, and the back screen does not change. In another case, a floating capsule "Payment App 1|Payment code|Loading" pops up on the main screen, and a prompt information interface is displayed on the back screen, so as to prompt the user to manually confirm that the two-dimensional code is opened, that is, both the main screen and the back screen change.

Example 3 of a scenario in which the two-dimensional code is not successfully displayed on the back screen:

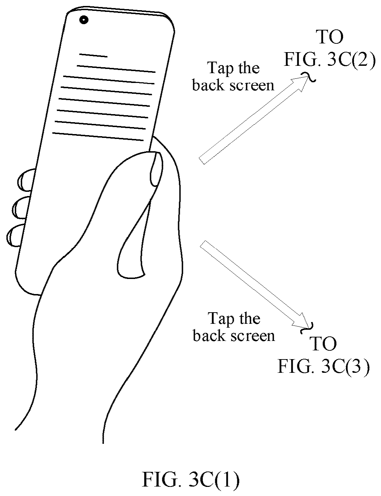

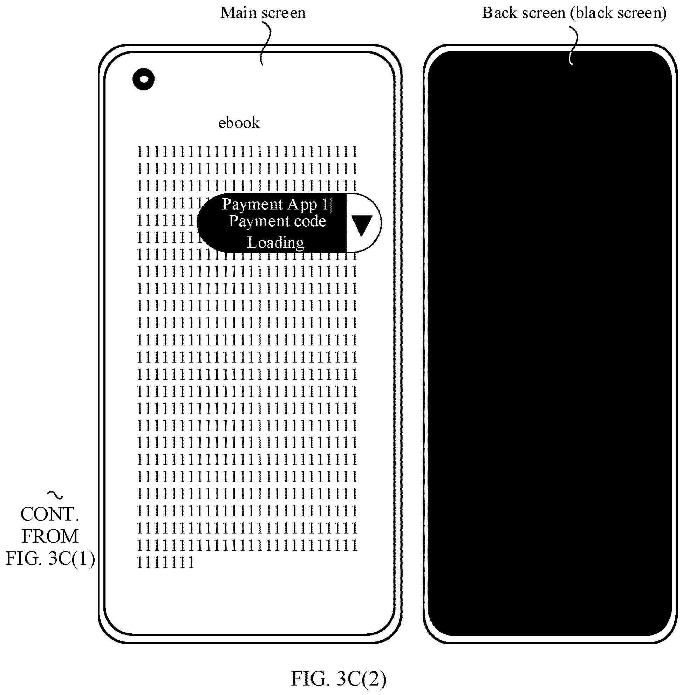

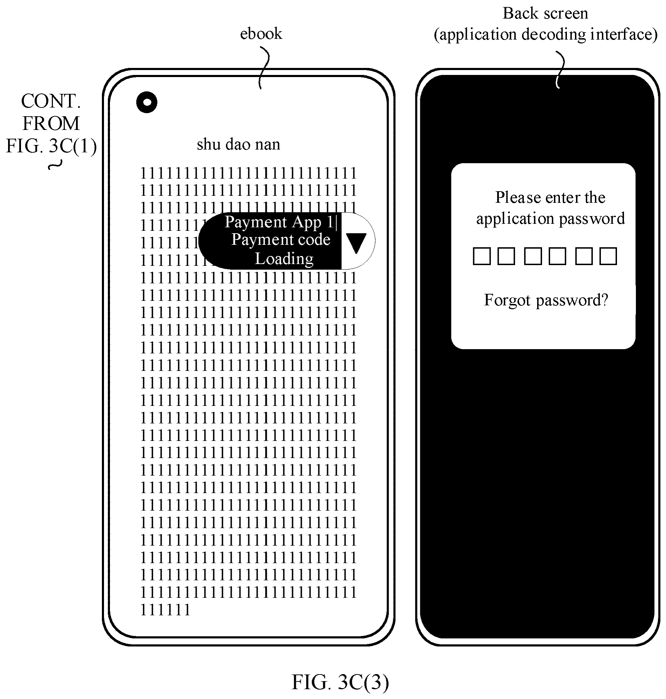

As shown in FIG. 3C(1) to FIG. 3C(3), after the user continuously taps the back screen two times, the outward foldable phone detects that an application lock is set for the payment application. Before the two-dimensional code is displayed, the user needs to manually enter an unlock password of the application. Specifically, in a case, a floating capsule "Payment App 1|Payment code|Loading" pops up on the main screen, and the back screen remains black, that is, the main screen changes, and the back screen does not change. In another case, a floating capsule "Payment App 1|Payment code|Loading" pops up on the main screen, and a prompt information interface is displayed on the back screen, so as to prompt the user to manually enter the unlock password of the application, that is, both the main screen and the back screen change.

Example 4 of a scenario in which the two-dimensional code is not successfully displayed on the back screen:

As shown in FIG. 3D(1) to FIG. D(3), after the user continuously taps the back screen two times, the outward foldable phone displays the payment code of the Payment App 1 on the back screen, and displays the floating capsule on the main screen. If the payment code displayed on the back screen is not a two-dimensional code that the user wants to use, the user may trigger the floating capsule to be updated to a drop-down list 103 and select "Use Passenger Code of Payment Application 2" from the drop-down list 103. The outward foldable phone detects that the user has not authorized the Payment App 2 to enable a passenger code function. In a case, a floating capsule "Payment App 1|Payment code|Loading" pops up on the main screen, and the back screen keeps the payment code of the Payment App 1, or the back screen is off. In another case, a floating capsule "Payment App 1|Payment code|Loading" pops up on the main screen, and an interface for prompting to enable the passenger code is displayed on the back screen. In both cases, the back screen does not display the passenger code of the Payment App 2.

It should be noted that the foregoing embodiment enumerates only a few relatively common scenarios in which the two-dimensional code is not successfully displayed on the back screen. It should be understood that the outward foldable phone may also fail to successfully display the two-dimensional code in another scenario.

In view of the foregoing problem, this application further provides a method for identifying whether a two-dimensional code is displayed on a back screen of a foldable-screen device. The method may be applied to a foldable-screen device in a folded state. After receiving the operation of the user for triggering display of a two-dimensional code on the back screen, the foldable-screen device obtains a screenshot of a payment application, and detects whether the screenshot of the payment application includes a two-dimensional code. If no two-dimensional code is included, the two-dimensional code display task on the back screen is moved to the main screen, and an interface of the payment application is displayed on the main screen. In this way, the user can find that the back screen fails to display the two-dimensional code without a need to flip the screen, triggers display of the two-dimensional code on the main screen through an operation on the interface of the payment application on the main screen, such as an operation of authorizing the payment application to enable a payment code, an operation of determining to open a two-dimensional code interface, and an operation of entering an unlock password of the payment application, and uses the two-dimensional code for scanning, thereby improving user experience.

To better understand the method for identifying whether the two-dimensional code is displayed on the back screen of the foldable-screen device according to the embodiment of this application, the following describes a hardware structure of the foldable-screen device according to an embodiment of this application.

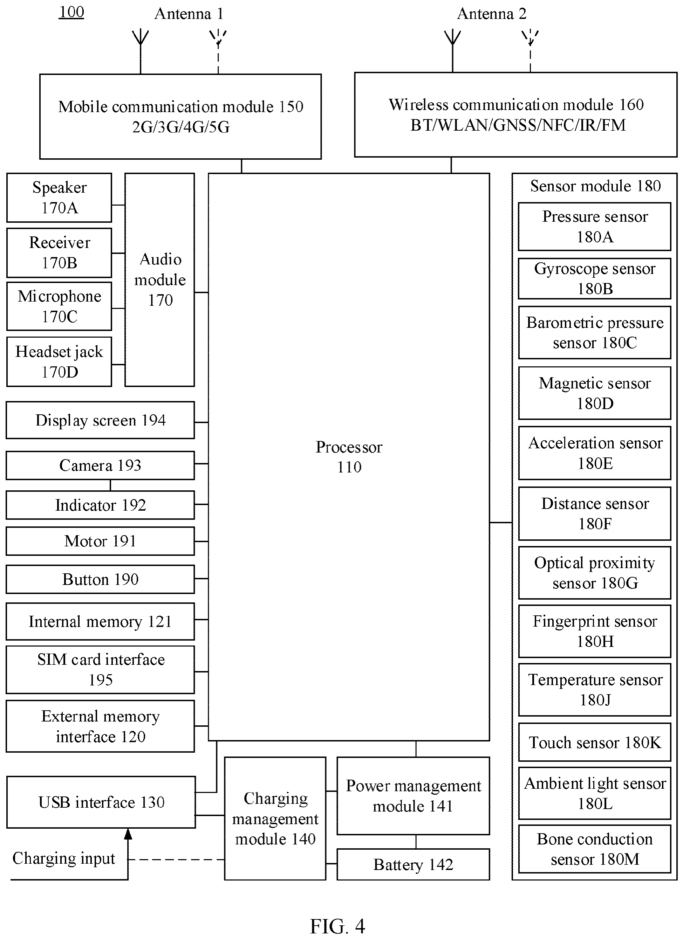

For example, FIG. 4 is a schematic diagram of a hardware structure of a foldable-screen device 100 according to an embodiment of this application.

As shown in FIG. 4, the foldable-screen device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a SIM card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include a central processing unit (central processing unit, CPU), a graphics processing unit (graphics processing unit, GPU), an application processor (application processor, AP), an image signal processor (image signal processor, ISP), a neural-network processing unit (neural-network processing unit, NPU), a video codec, a modem (modem), a data processing unit (data processing unit, DPU), and/or a baseband processor (baseband processor).

The CPU is a unit for final execution of information processing and program running, and mainly works for processing instructions, performing operations, controlling time, processing data, and the like. The CPU may include a controller, an arithmetic unit, a cache memory, and a bus for connecting these components. The controller is a nerve center and a command center of the foldable-screen device 100. The controller may generate an operation control signal based on instruction operation code and a timing signal, to complete control of instruction fetching and instruction execution. The arithmetic unit is a component that performs various arithmetic and logical operations. The cache may store instructions or data just used or cyclically used by the processor 110.

The GPU is also referred to as a display core, a visual processor, or a display chip, and is a microprocessor for graphics and image processing. The GPU is connected to the display screen 194, the AP, and the CPU. The GPU may be configured to perform complex mathematical and geometric calculation, floating-point operation, and parallel calculation, and may be further configured to perform graphics rendering. The GPU reduces the graphics card's dependence on the CPU, especially when processing 3D graphics. The GPU uses core technologies such as cubic environment material mapping and vertex blending. Therefore, the GPU performs some of the work originally done by the CPU.

The internal memory 121 may be configured to store computer-executable program code, and the executable program code includes instructions. The processor 110 runs the instructions stored in the internal memory 121, to perform various function applications and data processing of the foldable-screen device 100. The internal memory 121 may include a program storage area and a data storage area. The program storage area may store an operating system, an application required by at least one function, such as a payment application, and the like. The data storage area may store a configuration file of each application and data created in a use process of the foldable-screen device 100.

The foldable-screen device 100 may implement an audio function by using the audio module 170, the speaker 170A, the receiver 170B, the microphone 170C, the headset jack 170D, the AP, and the like.

The display screen 194 includes a main screen and a back screen shown in FIG. 1A to FIG. 1D.

It may be understood that the hardware structure shown in this embodiment of this application does not constitute a specific limitation on the foldable-screen device 100. In some other embodiments, the foldable-screen device 100 may include more or fewer components than those shown in the figure, combine some components, split some components, or have different component arrangements. The components shown in FIG. 4 may be implemented by hardware, software, or a combination of software and hardware.

A software system of the foldable-screen device 100 may use a layered architecture, an event-driven architecture, a micro core architecture, or a micro service architecture. In embodiments of this application, an Android (Android) system with a layered architecture is used as an example to describe a software architecture of the foldable-screen device.

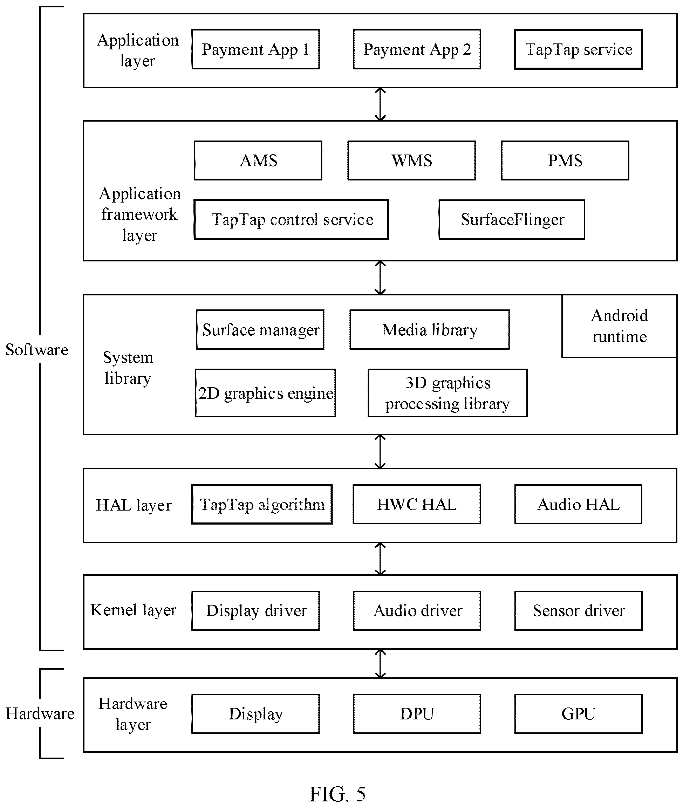

For example, FIG. 5 is a schematic diagram of an architecture of a foldable-screen device according to an embodiment of this application.

As shown in FIG. 5, the foldable-screen device may use a layered architecture in which software is divided into several layers and each layer has a clear role and task. Layers communicate with each other through a software interface. In some embodiments, a software structure is sequentially divided into software layers from top to bottom into an application (application, APP) layer, an application framework (framework, FW) layer, a system library (FWK LIB), a hardware abstraction layer (HAL), and a kernel (kernel) layer. The foregoing software architecture runs on a hardware layer, and the hardware layer may include a display screen, a GPU, a DPU, and the like.

The application layer may include a series of application packages. For example, the application layer may include a payment application, a TapTap service, and the like. The payment application may be a system application or a third-party payment application. The foldable-screen device may support installation of a plurality of payment applications, such as Payment App 1 and Payment App 2. The TapTap service is a system application provided by the foldable-screen device, and is configured to pull up a two-dimensional code interface of a payment application on the back screen in response to a start operation of a user. In addition, the TapTap service may be further configured to draw a floating capsule, a mask, and the like. When these application packages are run, an application programming interface (application programming interface, API) may be used to access various service modules provided at the application framework layer and execute corresponding intelligent services.

The application framework layer provides the API and a programming framework for the applications at the application layer. The application framework layer includes some predefined functions. As shown in FIG. 5, the application framework layer may include an activity manager service (activity manager service, AMS), a window manager service (window manager service, WMS), a package manager service (package manager service, PMS), a TapTap control service, a SurfaceFlinger (SurfaceFlinger), and the like. The AMS manages a lifecycle of each application. The WMS manages all windows in the system. The PMS manages all applications installed in the Android system. The TapTap control service is responsible for moving a task on the back screen to the main screen. The SurfaceFlinger is responsible for composition and display of layer data. For example, the SurfaceFlinger may provide layer information to a hardware composer (hardware composer, HWC) HAL, and the HWC HAL may determine, according to hardware performance, whether to use HWC underlying hardware or to use the GPU for composition.

The system library may include a plurality of function modules such as, a surface manager (surface manager), a media library (media libraries), a two-dimensional (2D) graphics engine (for example, SGL), and a three-dimensional (3D) graphics processing library (for example, OpenGL ES). The surface manager is configured to manage a display subsystem and provide fusion of 2D and 3D layers for a plurality of applications. The media library supports playing and recording in a plurality of common audio and video formats, a still image file, and the like. The media library may support a plurality of audio and video coding formats, for example, MPEG4, H.264, MP3, AAC, AMR, JPG, and PNG. The 2D graphics engine is a drawing engine for 2D graphics drawing. The three-dimensional graphics processing library is configured to implement three-dimensional graphics drawing, image rendering and composition, layer processing, and the like.

The Android runtime (Android Runtime) in the system library includes a kernel library and a virtual machine. The Android Runtime is responsible for scheduling and management of the Android system. The kernel library includes two parts: One part is a functional function that needs to be invoked by a java language, and the other part is a kernel library of Android. The application layer and the application framework layer run in the virtual machine. The virtual machine executes java files at the application layer and the application framework layer as binary files. The virtual machine is configured to perform functions such as object lifecycle management, stack management, thread management, security and exception management, and garbage collection.

The hardware abstraction layer has a standard interface implemented by a hardware vendor. For example, the hardware abstraction layer may include a TapTap algorithm, a hardware composer HAL, an audio HAL, and the like. The TapTap algorithm is used to calculate, when the user taps the back screen, whether the tap operation is a behavior that triggers enabling of the TapTap service.

The kernel layer is a layer between hardware and software, and is a bottom part of the Android system. The kernel layer may include various driver (drivers) interfaces, such as a display driver, an audio driver, and a sensor driver.

It should be noted that although the Android system is used as an example for description in this embodiment of this application, a basic principle thereof is also applicable to a foldable-screen device based on an operating system such as iOS or Windows.

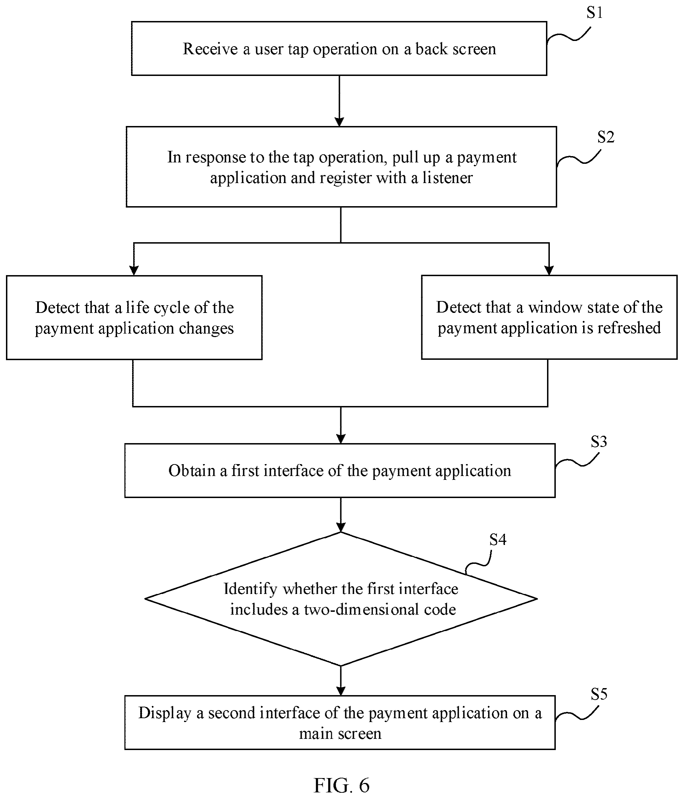

FIG. 6 shows a schematic flowchart of a method for identifying whether a two-dimensional code is displayed on a back screen. An example in which the method is executed by a foldable-screen device is used. As shown in FIG. 6, the method may include the following S1 to S5.

S1. The foldable-screen device receives a tap operation performed by a user on a back screen.

The foregoing "tap operation" may be two consecutive tap operations on the back screen. The "two consecutive tap operations" specifically means that a time interval between the first tap operation and the second tap operation is less than or equal to preset duration, for example, 0.5S (second).

In an example, at least one sensor may be disposed at a position corresponding to the back screen on the phone body. The sensor may be configured to collect a vibration signal generated on the back screen.

In still another example, at least one sensor may be disposed at a position corresponding to a main screen on the phone body. It should be understood that, because the main screen and the back screen are essentially one screen, when the foldable-screen device is in a folded state, a vibration signal may be collected by the sensor disposed at the position corresponding to the main screen even if the user taps the back screen.

In still another example, at least one sensor is disposed at each of locations corresponding to the main screen and the back screen on the machine body. It should be understood that when sensors are disposed at the positions corresponding to both the main screen and the back screen, accuracy of vibration signal detection is higher.

The foregoing sensor may be an acceleration (acceleration, ACC) sensor, an impact sensor, a vibration sensor, or the like.

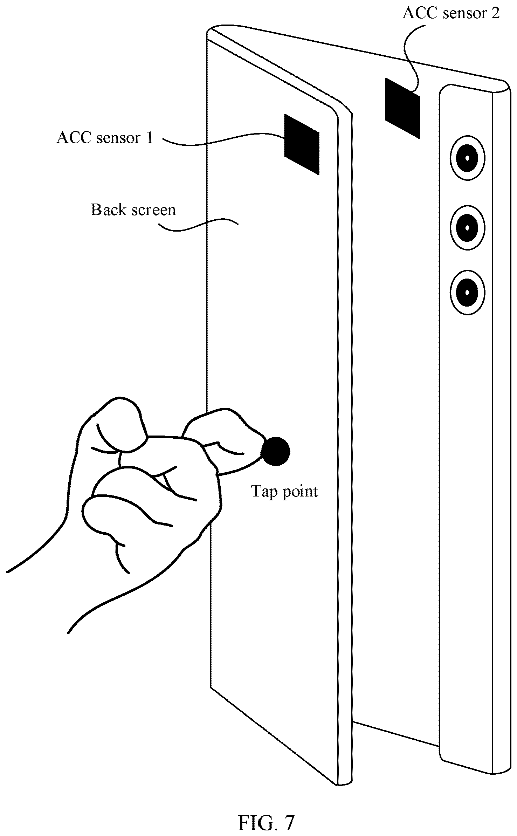

As shown in FIG. 7, two ACC sensors are disposed on the outward foldable phone, and the two ACC sensors are respectively corresponding to the main screen and the back screen. When the foldable-screen device is in a folded state, and the user has a code scanning demand, such as using a payment code to pay, using a payment code to receive money, or using a passenger code to take a ride, the user can use a body part such as a palm, a fingertip, a fingernail, a side nail, and a knuckle to tap the back screen twice in succession. Mechanical vibration is generated on the main screen and the back screen under the mechanical forces. The ACC sensor 1 and the ACC sensor 2 each collect at least two ACC signals. By using the collected ACC signals, magnitudes, positions, a time interval, and the like of the mechanical forces that are imposed on the touchscreen by the user may be calculated, so as to determine whether the input is a TapTap operation. In an example, the TapTap operation may be a double-tap operation on the back screen.

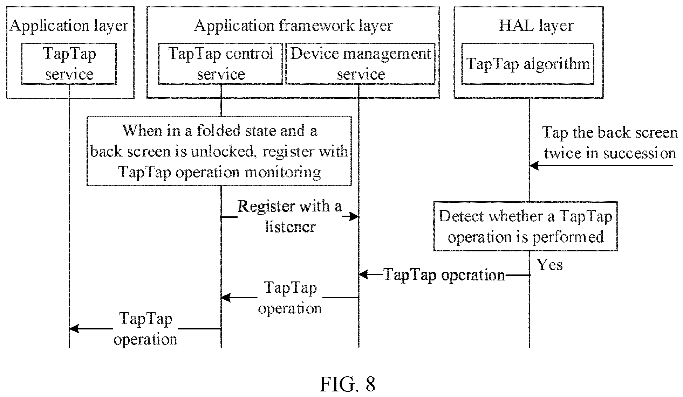

As shown in FIG. 8, in a case in which the foldable-screen device is in a folded state and the main screen is unlocked and on, a TapTap control service at the application framework layer notifies a device management service to register with a TapTap listener. The TapTap listener may be configured to monitor whether a TapTap operation exists, and the TapTap operation may be used to trigger a two-dimensional code pull-up on the back screen. After the ACC sensors collect the ACC signals, the TapTap algorithm of the HAL layer can be used to calculate whether the currently received user input is the TapTap operation based on the ACC signals. If the user input is the TapTap operation, the TapTap algorithm notifies the device management service. A listener of the device management service detects the TapTap operation, and transparently transmits the TapTap operation to the TapTap service at the application layer by using the TapTap control service, so as to trigger the TapTap service to pull up an application that provides a two-dimensional code, such as a payment application. It should be noted that, this embodiment of this application is described by using an example in which the application that provides a two-dimensional code is a payment application, and this application is not limited thereto. In actual implementation, the application that provides a two-dimensional code may also be any application providing a two-dimensional code, such as a social application, a financial application, or the like.

It should be understood that when the user needs to pull up a two-dimensional code interface of the payment application on the back screen, the user is more accustomed to performing a tap operation on the back screen. Therefore, it is more reasonable to dispose the sensor on the phone body at a position corresponding to the back screen. It should be noted that, although the foregoing embodiment is described by using an example in which the foldable-screen device receives a tap operation of the user on the back screen, this application is not limited thereto. The main screen and the back screen are essentially two display areas of a large screen. Therefore, when the user taps the main screen, the sensor on the phone body that is disposed at a position corresponding to the main screen can also collect a vibration signal. The TapTap algorithm can identify a TapTap operation on the back screen more accurately than a TapTap operation on the main screen.

S2. In response to the tap operation, the foldable-screen device registers with a listener, and pulls up the payment application.

For example, the TapTap service may register with either of the following two listeners.

One is an activity listener ActivityNotifer registered in the AMS, which is used to monitor whether a life cycle of an activity (activity) changes. The activity represents a single screen with a user interface, such as a Java window or frame. An activity of the Android system is a subclass of contextThemeWrapper.

For example, when the TapTap service performs onStart(), onRestart(), onResume(), onCreate(), onPause(), or onStop(), the life cycle of the activity changes. Here, onStart() is invoked when the activity is visible to the user, onRestart() is invoked when the activity is restarted after being stopped, onResume() is invoked when the application starts to interact with the user, onCreate() is invoked when the activity is created for the first time, onPause() is invoked when a current activity is to be suspended and a previous activity is to be recovered, and onStop() is invoked when the activity is not visible.

The other is a window listener WindowStateChangedListener registered in the WMS, which is used to monitor whether a window state is refreshed. It should be noted that the "window" herein refers to a view (view) of an application; and "window state refresh" refers to updating a view of an application in the background, but the view has not been displayed on the back screen.

In addition, the foregoing "pull up the payment application" refers to rapidly jumping to a two-dimensional code interface of the payment application according to the TapTap service setting. That is, display of the two-dimensional code interface can be triggered without opening a home page of the payment application as a conventional operation and performing a plurality of operations by the user.

S3. When it is detected, through the activity listener ActivityNotifer, that the life cycle of the payment application changes, or when it is detected, through the window listener WindowStateChangedListener, that the window state of the payment application is refreshed, the foldable-screen device obtains a first interface of the payment application.

For example, the foregoing first interface may be an interface screenshot of the payment application. The interface screenshot of the payment application may be a display (display) screenshot, or may be a view (view) screenshot.

If the TapTap service registers with the activity listener ActivityNotifer in the AMS, the activity listener ActivityNotifer may notify the TapTap service when the activity listener ActivityNotifer detects a change in the life cycle of the payment application. The TapTap service obtains a display (display) screenshot of the payment application from the WMS. It should be noted that the "display (display)" herein refers to an image that has been displayed on the back screen.

If the TapTap service registers with the window listener WindowStateChangedListener in the WMS, when the window listener WindowStateChangedListener detects that the window state of the payment application is refreshed, the window listener WindowStateChangedListener notifies the TapTap service, and a message notifying the TapTap service includes interface screenshot information of the payment application. The TapTap service obtains the view (view) screenshot of the payment application according to the interface screenshot information. It should be noted that the "view (view)" herein refers to an image that has not been displayed on the back screen.

S4. The foldable-screen device identifies whether the first interface includes a two-dimensional code.

For example, after the TapTap service obtains the interface screenshot of the payment application, the TapTap service may invoke a zxing service to identify whether the first interface includes a two-dimensional code. The zxing service is an open source library for 1D barcode (i.e. barcode) and 2D barcode (i.e. two-dimensional code) image processing in a plurality of formats implemented by using a Java language.

S5. If the first interface does not include a two-dimensional code, the foldable-screen device displays a second interface of the payment application on the main screen.

Both the first interface and the second interface are interfaces that do not include a two-dimensional code.

Specifically, if the first interface is a display (display) screenshot, the first interface is an interface formed after a mask is superposed on the second interface. For example, the first interface is a two-dimensional code enabling interface with a partial area covered by the mask, and the second interface is a complete two-dimensional code enabling interface, that is, content of some areas of the first interface is the same as that of the second interface. If the first interface is a view (view) screenshot, content of the first interface and content of the second interface are the same. For example, both the first interface and the second interface are the two-dimensional code enabling interface.

It should be understood that when the foldable-screen device is in a folded state, attention of the user mainly focuses on the main screen. In a case in which the interface screenshot of the payment application does not include a two-dimensional code, if the user does not flip the back screen toward the user, the user may not find in time that the back screen does not display the two-dimensional code successfully. To avoid a code scanning failure, the foldable-screen device may move a display task on the back screen to the main screen, and display the interface of the payment application on the main screen. In this way, the user can find that the back screen fails to display the two-dimensional code without a need to flip the screen, triggers display of the two-dimensional code on the main screen through an operation on the interface of the payment application on the main screen, such as an operation of authorizing the payment application to enable a payment code, an operation of determining to open a two-dimensional code interface, and an operation of entering an unlock password of the payment application, and uses the two-dimensional code for scanning, thereby improving user experience.

The following describes two methods for identifying whether a two-dimensional code is displayed on a back screen of a foldable-screen device by using two embodiments, respectively.

### Embodiment 1

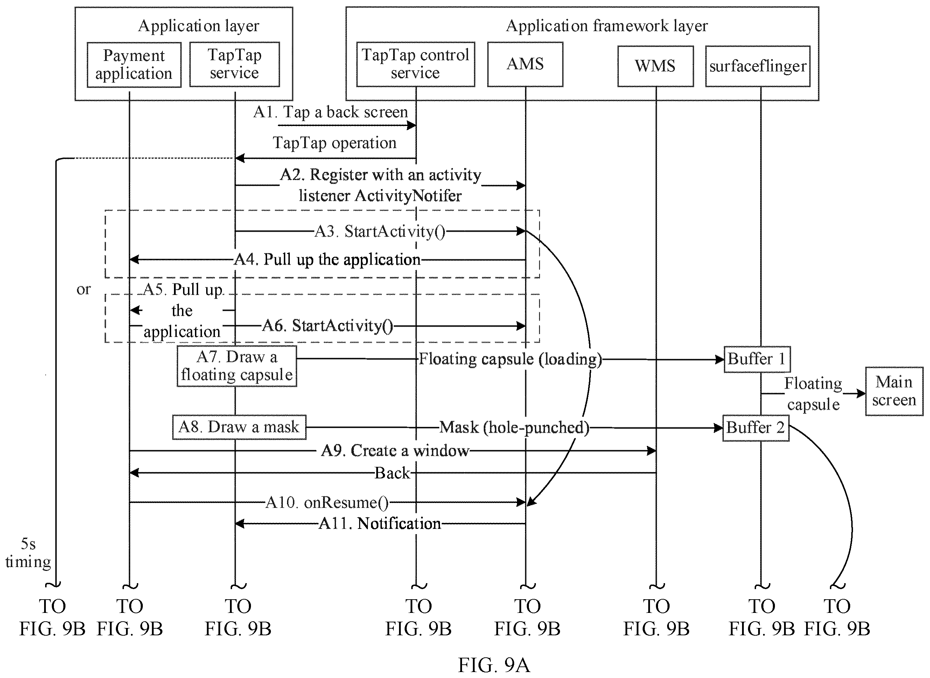

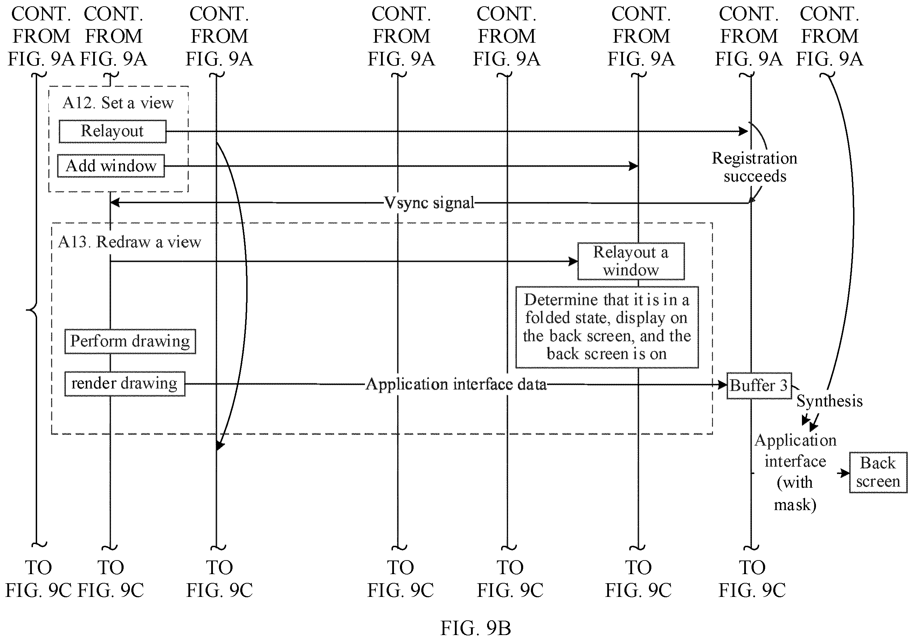

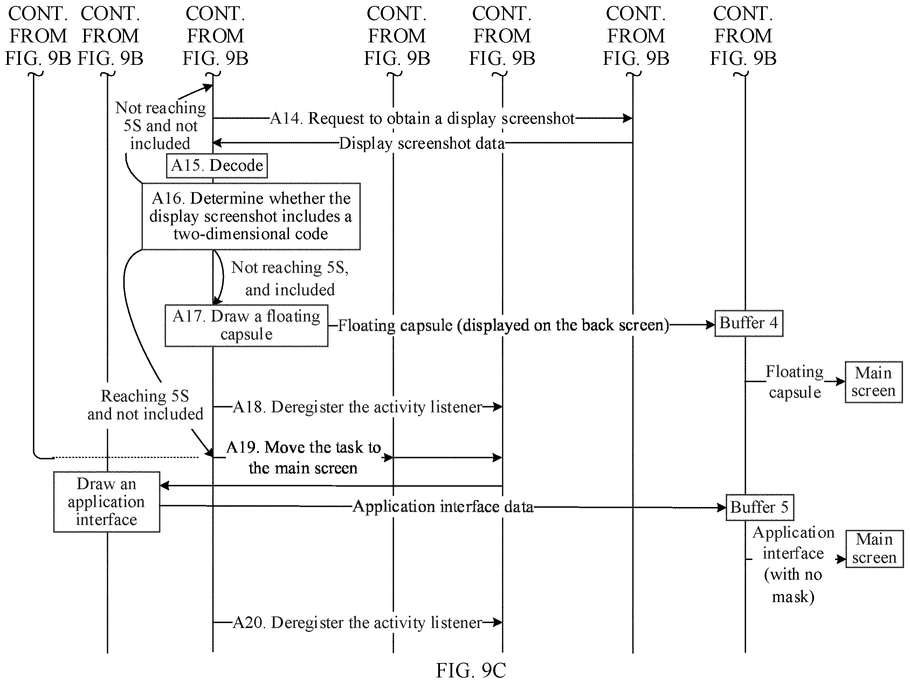

FIG. 9A to FIG. 9C show a flowchart of a method for identifying whether a two-dimensional code is displayed on a back screen of a foldable-screen device by using an activity listener ActivityNotifer. The method may be executed by functional modules of the foldable-screen device. As shown in FIG. 9A to FIG. 9C, the method may include the following A1 to A20.

A1. When a user taps a back screen, a TapTap control service obtains a TapTap operation, and pulls up a TapTap service.

After the TapTap service is pulled up, a timer is started, and maximum timing duration of the timer is preset by the TapTap service, for example, the maximum timing duration is 5S or 10 seconds.

For a specific implementation of A1, refer to the related descriptions of S1 in the foregoing embodiment. Details are not described herein again.

A2. The TapTap service notifies an AMS to register with an activity listener ActivityNotifer.

The activity listener ActivityNotifer is configured to monitor whether a life cycle of an activity changes.

For example, a change in a life cycle of an activity may be onStart(), onRestart(), onResume(), onCreate(), onPause(), onStop(), or the like.

Specifically, the TapTap service may notify an object ActivityManagerEx in the AMS to register with the activity listener ActivityNotifier. The object ActivityManagerEx registers with an activity listener ActivityNotifier of an ActivityLifeStateCallBack type, and saves the listener ActivityNotifier into mActivityNotifier.

After the TapTap service notifies the AMS to register with the activity listener ActivityNotifer, the TapTap service may further pull up a two-dimensional code interface of a payment application in any one of the following manners:
In one manner, the following A3 is performed first, and then the following A4 is performed.

In another manner, the following A5 is performed first, and then the following A6 is performed.

A3. The TapTap service pulls up the two-dimensional code interface of the payment application by using a StartActivity() method.

The StartActivity() method carries a parameter used to indicate the two-dimensional code interface of the payment application. With this parameter, the AMS can determine that the two-dimensional code interface of the payment application needs to be pulled up.

A4. The AMS pulls up the two-dimensional code interface of the payment application.

A5. The TapTap service invokes a software development kit (software development kit, SDK) provided by the payment application to pull up the two-dimensional code interface of the payment application.

A6. The payment application invokes the AMS by using the StartActivity() method to pull up the two-dimensional code interface of the payment application.

A7. After the TapTap service notifies the payment application or the AMS to pull up the two-dimensional code interface of the payment application, the TapTap service draws a floating capsule, and stores the drawn floating capsule into a buffer (such as buffer 1) of a SurfaceFlinger. After synthesizing the floating capsule and another application interface (such as the e-book), the SurfaceFlinger sends synthesized content to the main screen for displaying.

For an implementation of drawing the floating capsule by the TapTap service, reference may be made to the following descriptions of A12 and A13.

For example, the floating capsule 101 may be shown in FIG. 2A(2), and includes prompt information "Payment App 1|Payment code|Loading". By using the prompt information, the user may know that the outward foldable phone is attempting to pull up the payment code interface of the Payment App 1.

A8. The TapTap service draws a mask, and stores the drawn mask into a buffer (such as buffer 2) of the SurfaceFlinger.

For an implementation of drawing the mask by the TapTap service, reference may be made to the following descriptions of A12 and A13.

It should be noted that the "mask" in the foregoing A8 has been well processed for a hole-punch area, that is, the hole-punch area is transparent. When the SurfaceFlinger synthesizes layers, the mask does not block the layer below (such as the two-dimensional code interface of the payment application, or the two-dimensional code enabling interface), so that the layer below can be transparent from the mask.

In addition, the floating capsule in A7 and the mask in A8 are respectively displayed on the back screen and the main screen, and there is no limitation on a display time of the two. Therefore, an execution sequence of A7 and A8 in this embodiment of this application is not limited. For example, A7 and A8 may be performed simultaneously, or A7 is performed first and then A8 is performed, or A8 is performed first and then A7 is performed.

A9. After the payment application is pulled up, the payment application notifies the WMS to create a window for the payment application. The window is used to display the interface of the payment application.

Accordingly, the WMS returns a reply message indicating that the window has been created to the payment application.

A10. The payment application invokes an onResume() method, and notifies the AMS that the activity of the payment application has been executed to onResume.

A11. After the AMS detects, by using the activity listener ActivityNotifer, that the activity of the payment application has been executed to onResume, the AMS notifies (calls) the TapTap service.

When the life cycle of the payment application changes, the WMS notifies the activity listener ActivityNotifer, so that the activity listener ActivityNotifer can detect that the life cycle of the payment application changes and notify the TapTap service.

It should be noted that the foregoing embodiment is described by using an example in which the AMS notifies the TapTap service when the payment application invokes the onResume() method, and this application is not limited thereto. Referring to the descriptions of the foregoing embodiments, the AMS also notifies the TapTap service when the payment application invokes the onStart(), onRestart(), onCreate(), onPause(), or onStop() method, or another lifecycle-related method.

A12. The payment application performs a set view setView() method.

The setView() method is used to add a view (view).

For example, in a process in which the payment application performs setView(), a relayout requestLayout() method is first performed, and then an add window addWindow() method is performed. The requestLayout() method is used to trigger redrawing of the view (view), and the addWindow() method is used to add a window to the view (view).

In a process of executing the requestLayout() method by the payment application, the payment application interacts with the SurfaceFlinger to request registration. After the registration succeeds, the SurfaceFlinger returns a vertical synchronization (vertical synchronization, Vsync) signal to the payment application. The Vsync signal is used to control drawing, rendering, and synthesis of one or more layers. The Vsync signal is a periodic signal, and a periodic frequency of the Vsync signal determines a system frame rate.

It should be noted that the SurfaceFlinger continuously generates a periodic Vsync signal. Only after the payment application registers successfully, the SurfaceFlinger starts to return the Vsync signal to the payment application.

A13. The payment application performs a method of redrawing a view performTraversals().

The performTraversals() method is used to redraw a view (view) for the payment application.

For example, after the Vsync signal is received, the payment application may invoke a perform drawing performTraverals() method of viewRootlpml to trigger view drawing.

In an aspect, the performTraverals() method invokes a relayout window RelayoutWindow() method to set a desired window height, window width, and the like. For example, the desired window height is the height of the back screen, and the desired window width is the width of the back screen. The WMS first executes the relayout window RelayoutWindow() method, and then turns on the back screen in a case in which it is determined that the foldable-screen device is in a folded state and a view (view) needs to be displayed on the back screen (before this, the back screen is in a black screen state).

In another aspect, in a process of executing the performTraversals() method by the payment application, a performdraw() method is first executed, and then a render thread is executed. The performdraw() method is used to prepare a canvas, and the render thread is used to render a view (view) to the canvas, that is, draw a pulled application interface. Then, the payment application stores the drawn application interface into a buffer (such as buffer 3) of the SurfaceFlinger.

After the payment application stores the drawn application interface into a buffer (such as buffer 3) of the SurfaceFlinger, the SurfaceFlinger reads application interface data from the buffer 3 and reads mask data from the buffer 2. Then, the SurfaceFlinger covers the mask over the application interface, with only a part of the area exposed from the hole-punch area, and finally one frame of image is synthesized. Then, the SurfaceFlinger sends the application interface covered by the mask to the back screen for displaying, so that the back screen displays the application interface covered by the mask.

It should be noted that the application interface herein may be an interface that includes a two-dimensional code, that is, an application interface that really needs to be pulled up; or may be an interface that does not include a two-dimensional code, for example, an interface that prompts the user to enable a payment code, an interface that prompts the user to determine to display the two-dimensional code, or an interface that prompts the user to enter a password of the payment application.

A14. After the TapTap service receives, from the AMS, a notification that the life cycle of the activity changes, the TapTap service invokes a get system screenshot getSystemScreenshots() method, and requests to obtain display (display) screenshot data of the payment application from the WMS.

Accordingly, the WMS returns the obtained display (display) screenshot data to the TapTap service.

It should be noted that the display (display) screenshot data refers to screenshot data obtained after screenshot is performed on the application interface covered by the mask that is displayed on the back screen.

A15. The TapTap service decodes (decode) the display (display) screenshot data to obtain a display (display) screenshot.

The display (display) screenshot is the first interface in the foregoing S3.

A16. The TapTap service determines whether the display (display) screenshot includes a two-dimensional code.

For example, the TapTap service may invoke the zxing service to identify whether the display (display) screenshot includes a two-dimensional code.

If the display (display) screenshot includes a two-dimensional code, and the timing duration of the timer does not reach 5S, the TapTap service may execute the following A17 and A18.

If the display (display) screenshot does not include a two-dimensional code, and the timing duration of the timer does not reach 5S, the TapTap service may return to execute the foregoing A15 and A16.

If the display (display) screenshot does not include a two-dimensional code, and the timing duration of the timer reaches 5S, the TapTap service may execute the following A19 and A20.

A17. The TapTap service draws a floating capsule and stores the drawn floating capsule into a buffer (such as buffer 4) of the SurfaceFlinger. After synthesizing the floating capsule and another application interface (such as the e-book), the SurfaceFlinger sends synthesized content to the main screen for displaying.

For an implementation of drawing the floating capsule by the TapTap service, refer to the foregoing descriptions of A12 and A13.

It should be noted that prompt information in the floating capsule drawn in A7 is different from that in the floating capsule drawn in A17. The prompt information in the floating capsule drawn in A7 is used to indicate that the two-dimensional code interface is being loaded, and the prompt information in the floating capsule drawn in A17 is used to indicate that the two-dimensional code interface has been displayed on the back screen.

For example, if it is detected, within 5S, that the display (display) screenshot includes a two-dimensional code, an application interface (that is, a two-dimensional code) covered by a mask may continue to be displayed on the back screen, and a floating capsule shown in FIG. 2A(3) is popped out of the main screen. The floating capsule 101 may include prompt information "Payment App 1|Payment code|Displayed on the back screen". According to the prompt information, the user may know that the foldable-screen device has successfully pulled up the payment code interface of the Payment App 1. It should be understood that, when different payment applications are pulled up, or when different two-dimensional code interfaces are pulled up, the prompt information of the floating capsule is also different.

A18. The TapTap service invokes an unregisterActivityNotifiers() method to notify the AMS to deregister the activity listener ActivityNotifer.

It should be understood that if it is detected, within 5S, that the display (display) screenshot includes a two-dimensional code, it indicates that the two-dimensional code has been successfully displayed on the back screen, and it is not required to monitor whether the two-dimensional code has been successfully displayed. Therefore, the TapTap service may notify the AMS to deregister the activity listener ActivityNotifer.

A19. The TapTap service invokes a moveTaskToFrontDisplay() method, and notifies the AMS to move the display task on the back screen to the main screen by using the TapTap control service.

For example, the AMS may modify a display ID of a task from an ID of the back screen to an ID of the main screen. The payment application draws an application interface, and stores the drawn application interface into a buffer (such as buffer 5) of the SurfaceFlinger. After the layer synthesis is completed, the SurfaceFlinger sends the application interface to the main screen for displaying. The main screen displays the interface of the payment application, and the interface is the second interface in the foregoing S5, for example, the two-dimensional code enabling interface.

It should be noted that, before the display task on the back screen is moved to the main screen, the application interface displayed on the back screen is covered by a mask, to facilitate scanning by the user, and the main screen displays an application interface, such as an e-book interface, that is displayed before the TapTap operation is received. After the display task on the back screen is moved to the main screen, the application interface displayed on the main screen is updated to an uncovered interface (that is, the original application interface is displayed on the main screen), so that the user triggers display of the two-dimensional code by performing an operation on the application interface.

A20. The TapTap service invokes the unregisterActivityNotifiers() method to notify the AMS to deregister the activity listener ActivityNotifer.

After A19 and A20, because the back screen has no display task, the back screen enters a black screen state. The black screen state means that the back screen is powered off or enters a screen-off state.

It should be understood that if the two-dimensional code is still not detected when the maximum timing duration 5S is reached, it indicates that displaying the two-dimensional code on the back screen fails, and whether the two-dimensional code is successfully displayed does not need to be monitored. Therefore, the TapTap service may notify the AMS to deregister the activity listener ActivityNotifer.

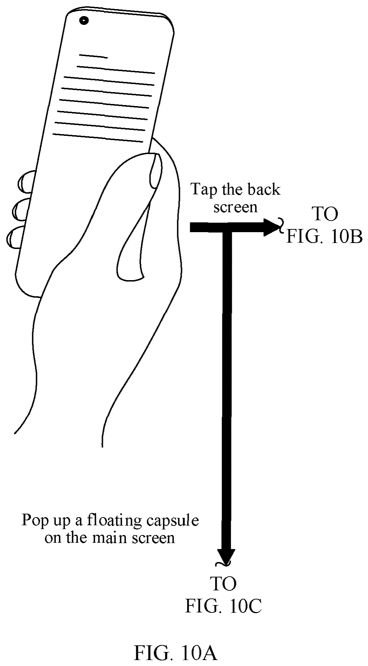

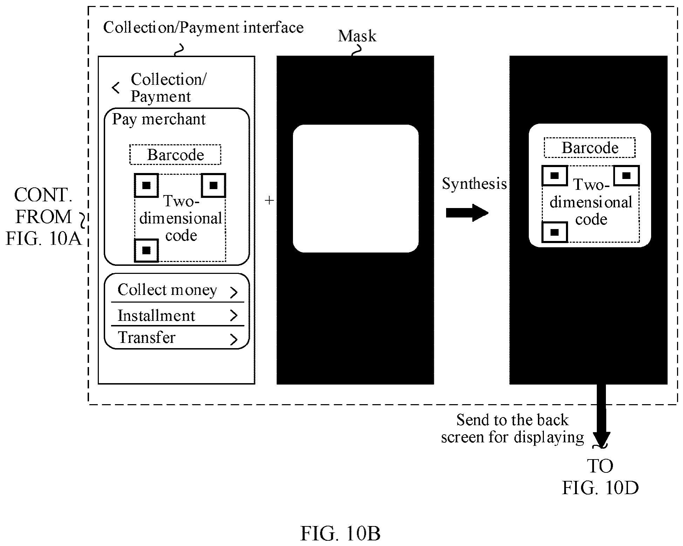

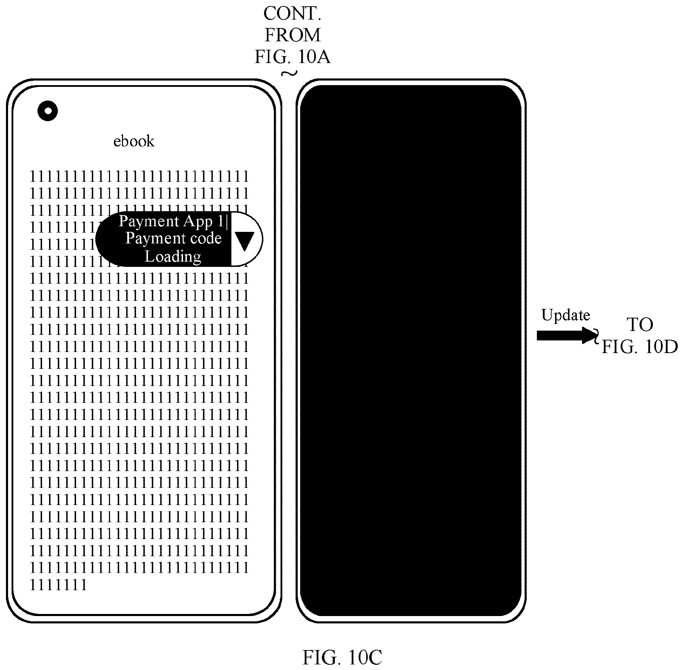

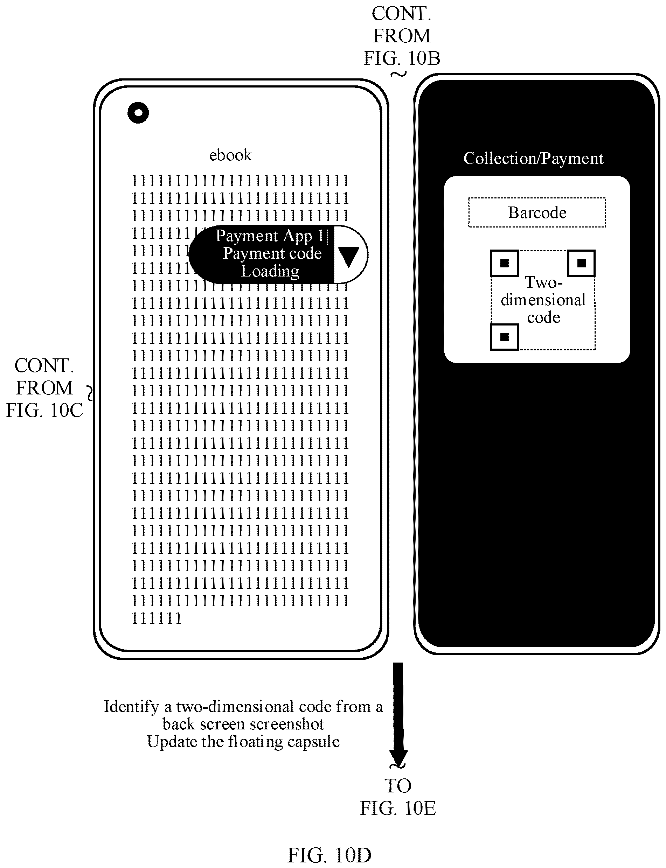

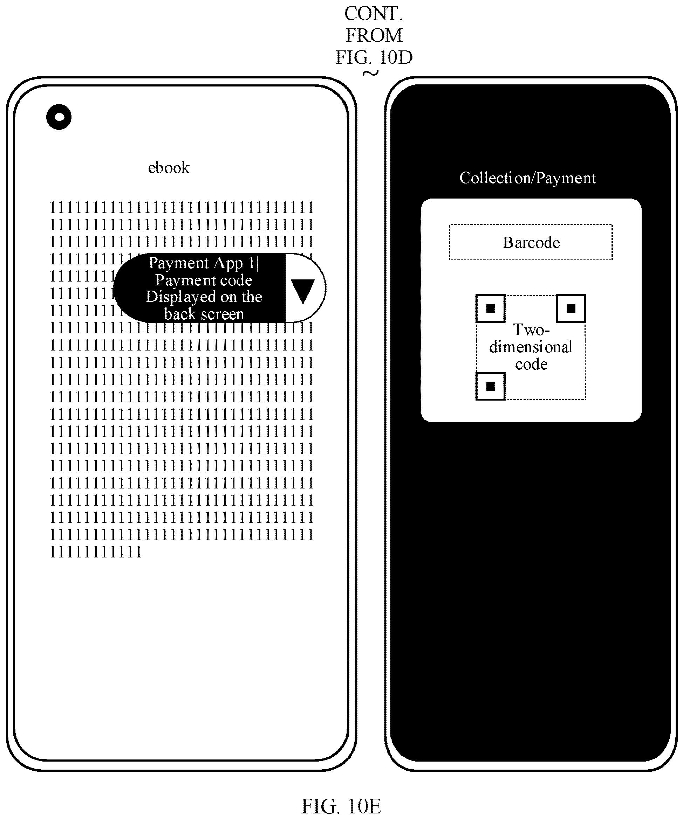

In an example, FIG. 10A to FIG. 10E show a schematic diagram of a scenario in which a two-dimensional code is identified from a back screen screenshot. As shown in FIG. 10A to FIG. 10E, when the foldable screen is in a folded state, the user continuously taps the back screen two times. In an aspect, the foldable-screen device pops up, on the main screen, a floating capsule "Payment App 1|Payment code|Loading". In another aspect, the foldable-screen device draws a collection/payment interface, and covers a dark mask on an upper layer of the collection/payment interface to cover most areas of the collection/payment interface, and only a two-dimensional code and a barcode are exposed from the hole-punch area. Then, the SurfaceFlinger sends, to the back screen for displaying, the collection/payment interface covered by the mask, so that the back screen displays the collection/payment interface covered by the mask (that is, the two-dimensional code and the barcode). Then, the foldable-screen device obtains a display (display) screenshot, identifies that the display (display) screenshot includes a two-dimensional code, and then updates the floating capsule. For example, the prompt information of the floating capsule is updated from "Payment App 1|Payment code|Loading" to "Payment App 1|Payment Code|Displayed on the back screen". According to the prompt information, the user may know that the back screen successfully displays the payment code from the Payment App 1. It should be understood that, for different payment applications or two-dimensional code interfaces that are pulled up, prompt information of the floating capsule is also different.

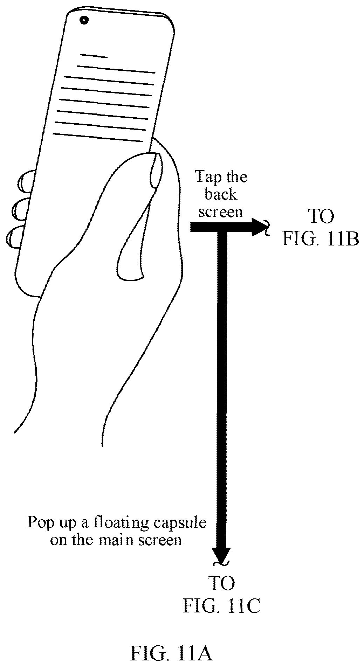

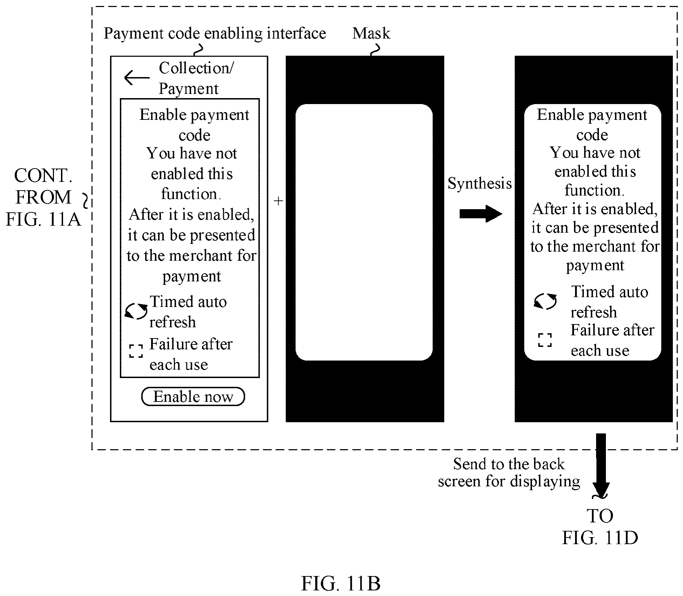

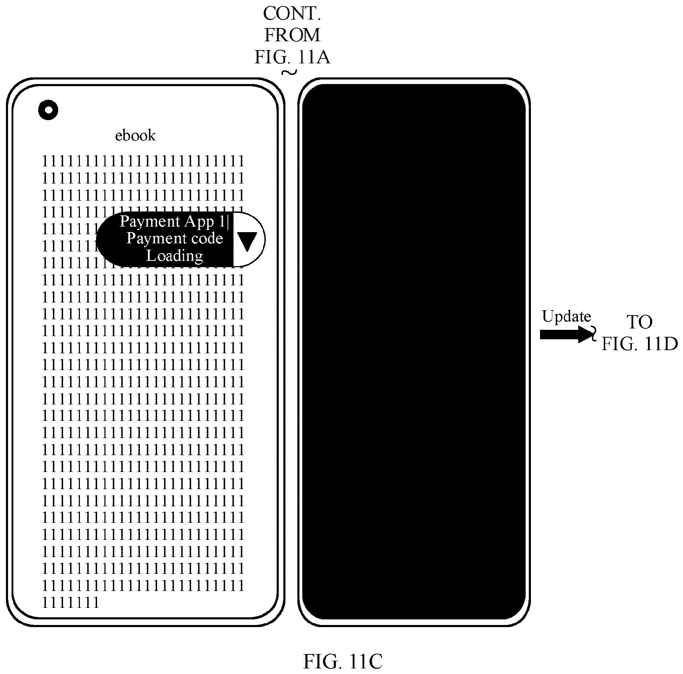

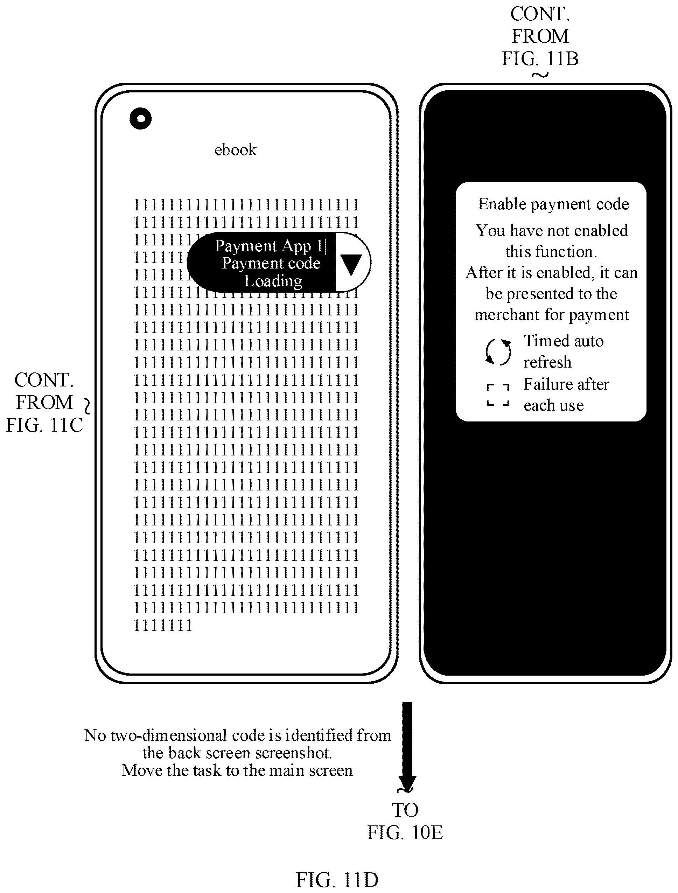

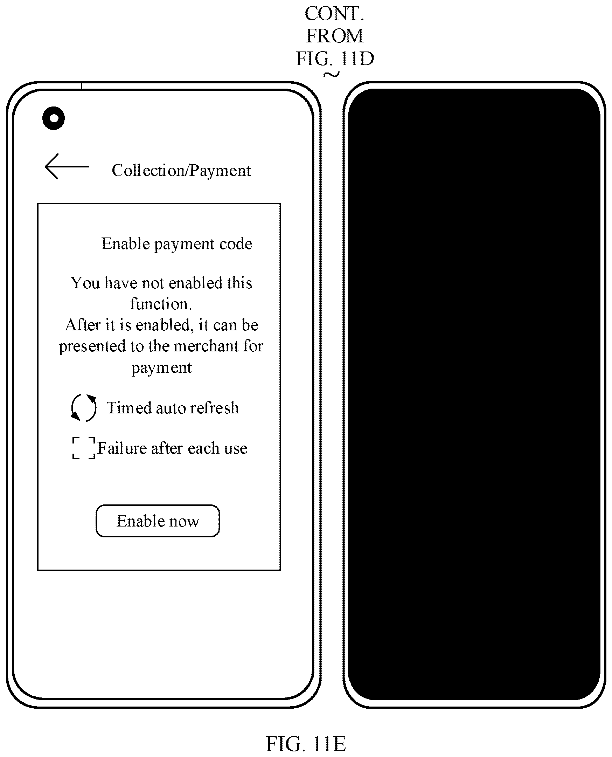

In an example, FIG. 11A to FIG. 11E show a schematic diagram of a scenario in which no two-dimensional code is identified from a back screen screenshot. As shown in FIG. 11A to FIG. 11E, when the foldable screen is in a folded state, the user continuously taps the back screen two times. The collection/payment function is not enabled for the payment application. In an aspect, the foldable-screen device pops up, on the main screen, a floating capsule "Payment App 1|Payment code|Loading". In another aspect, the foldable-screen device first draws a collection/payment enabling interface, and covers a dark mask on an upper layer of the collection/payment interface to cover most areas of the collection/payment interface, and only prompt information indicating to enable collection/payment is exposed from the hole-punch area. Then, the SurfaceFlinger sends, to the back screen for displaying, the collection/payment enabling interface covered by the mask, so that the back screen displays the collection/payment enabling interface covered by the mask (that is, including no two-dimensional code). Then, the foldable-screen device obtains a display (display) screenshot, identifies that the display (display) screenshot does not include a two-dimensional code, then moves the payment application display task to the main screen, and displays, on the main screen, the collection/payment enabling interface that is not covered by the mask, so that the user can find, without flipping the screen, that displaying of the two-dimensional code on the back screen fails. In the method provided in Embodiment 1, the TapTap service may detect, by registering with the activity listener ActivityNotifer, whether an activity of the payment application changes, obtain display (display) screenshot data when the activity changes, and move the payment application display task to the main screen when no two-dimensional code is identified from the display (display) screenshot data, so that the user does not need to flip the screen to find that the two-dimensional code is not successfully displayed on the back screen.

It should be noted that in the method provided in Embodiment 1, the foldable-screen device first displays, on the back screen, the application interface covered by the mask, and then detects whether the application interface includes a two-dimensional code. That is, regardless of whether the to-be-displayed application interface includes a two-dimensional code, the foldable-screen device directly displays, on the back screen, the application interface covered by the mask.

An embodiment of this application further provides another method for identifying whether a two-dimensional code is displayed on the back screen of the foldable-screen device. For a specific implementation of the method, reference may be made to the following Embodiment 2. In the method provided in Embodiment 2, only when it is identified that the to-be-displayed application interface includes a two-dimensional code, the foldable-screen device displays, on the back screen, the two-dimensional code interface covered by the mask. That is, another interface covered by a mask is not displayed on the back screen, for example, an interface that prompts the user to open a payment code, an interface that prompts the user to determine to display a two-dimensional code, or an interface that prompts the user to enter a password of the payment application.

### Embodiment 2

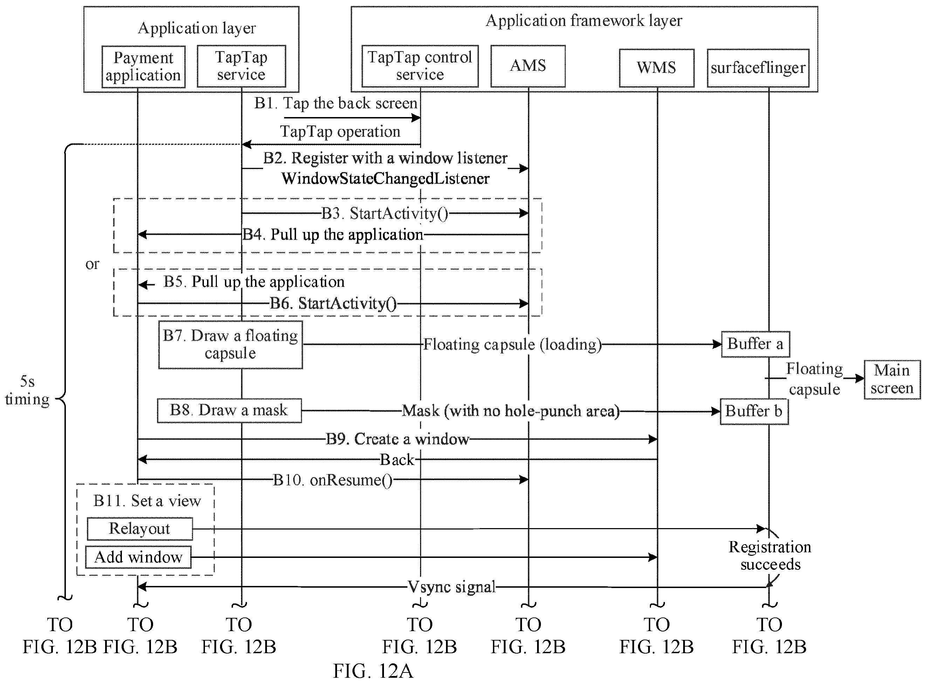

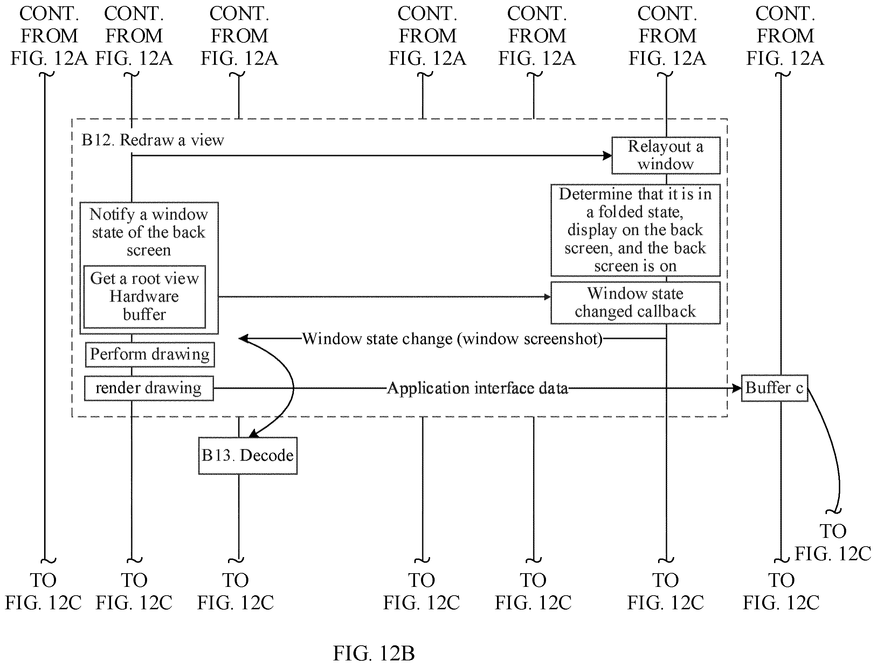

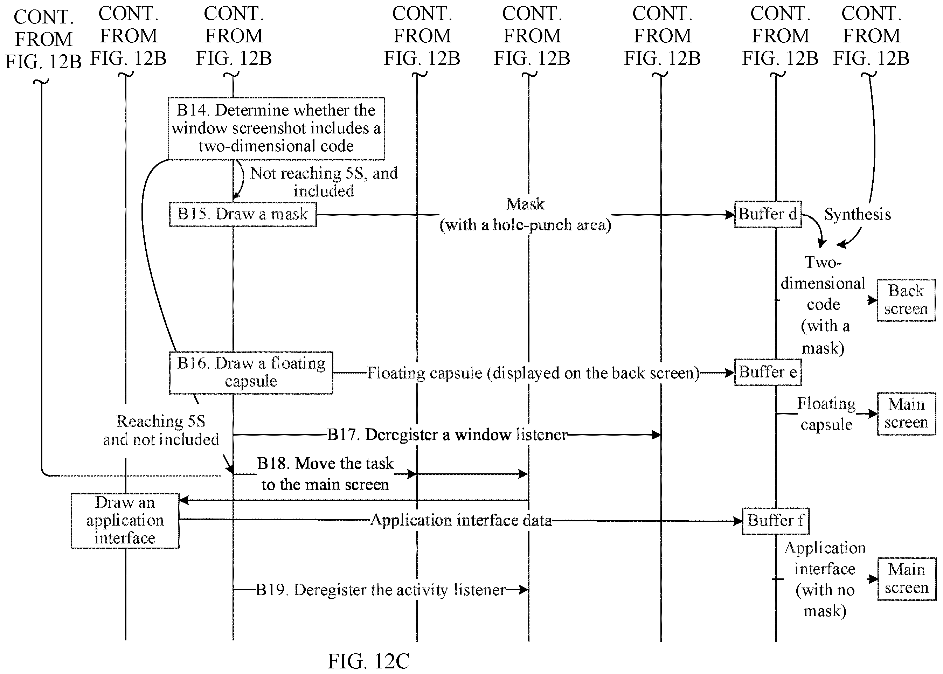

FIG. 12A to FIG. 12C show a flowchart of a method for identifying, by using a window listener WindowStateChangedListener, whether an application interface (that is, an application interface that has not been displayed on the back screen) that is to be displayed on the back screen includes a two-dimensional code. The method may be executed by functional modules of the foldable-screen device. As shown in FIG. 12A to FIG. 12C, the method may include the following B1 to B19.

B1. When a user taps a back screen, a TapTap control service obtains a TapTap operation, and pulls up a TapTap service.

For a specific implementation of B1, refer to the related descriptions of S1 and A1 in the foregoing embodiments. Details are not described herein again.

B2. The TapTap service notifies a WMS to register with a window listener WindowStateChangedListener.

The window listener WindowStateChangedListener is configured to monitor whether a window state of a payment application changes.

Specifically, the TapTap service may notify an object windowManagerEX in the WMS. The windowManagerEX executes an mWindowStateChangedListener.add() method to notify another object WindowStateCallbackEX in the WMS to register with the window listener WindowStateChangedListener.

After the TapTap service notifies the WMS to register with the window listener WindowStateChangedListener, the TapTap service may further pull up a two-dimensional code interface of the payment application in either of the following manners:

In one manner, the following B3 is executed first, and then the following B4 is executed.

In another manner, the following B5 is executed first, and then the following B6 is executed.

B3. The TapTap service pulls up the two-dimensional code interface of the payment application by using a StartActivity() method.

The StartActivity() method carries a parameter used to indicate the two-dimensional code interface of the payment application. With this parameter, the AMS can determine that the two-dimensional code interface of the payment application needs to be pulled up.

B4. The AMS pulls up the two-dimensional code interface of the payment application.

B5. The TapTap service invokes a software development kit (software development kit, SDK) provided by the payment application to pull up the two-dimensional code interface of the payment application.

B6. The payment application invokes the AMS by using the StartActivity() method, to indicate to pull up the two-dimensional code interface of the payment application.

B7. After the TapTap service notifies the payment application or the AMS to pull up the two-dimensional code interface of the payment application, the TapTap service draws a floating capsule, and stores the drawn floating capsule into a buffer (such as buffer a) of a SurfaceFlinger. After synthesizing the floating capsule and another application interface (such as the e-book), the SurfaceFlinger sends synthesized content to the main screen for displaying.

For an implementation of drawing the floating capsule by the TapTap service, reference may be made to the following descriptions of B11 and B12.

For example, the floating capsule 101 may be shown in FIG. 2A(2), and includes prompt information "Payment App 1|Payment code|Loading". By using the prompt information, the user may know that the outward foldable phone is attempting to pull up the payment code interface of the Payment App 1.

B8. The TapTap service draws a mask, and stores the drawn mask into a buffer (such as buffer b) of the SurfaceFlinger.

For an implementation of drawing the mask by the TapTap service, reference may be made to the following descriptions of B11 and B12.

It should be noted that the "mask" in the foregoing B8 does not have a hole-punch area.

In addition, the floating capsule in B7 and the mask in B8 are respectively displayed on the back screen and the main screen, and there is no limitation on a display time of the two. Therefore, an execution sequence of B7 and B8 in this embodiment of this application is not limited. For example, B7 and B8 may be performed simultaneously, or B7 is performed first and then B8 is performed, or B8 is performed first and then B7 is performed.

B9. After the payment application is pulled up, the payment application notifies the WMS to create a window for the payment application. Accordingly, the WMS returns a reply message indicating that the window has been created to the payment application.

B10. The payment application invokes an onResume() method, and notifies the AMS that the activity of the payment application has been executed to onResume.

It should be noted that in Embodiment 2, because the TapTap service does not register with the activity listener ActivityNotifer in the AMS, the AMS does not notify the TapTap service even if the life cycle of the payment application changes, that is, A9 in Embodiment 1 does not need to be performed.

B11. The payment application performs a set view setView() method.

The setView() method is used to add a view (view).

For an implementation of B11, refer to the related descriptions of A12. Details are not described herein again.

B12. The payment application performs a method of redrawing a view performTraversals().

For example, after the Vsync signal is received, the payment application may invoke a perform drawing performTraverals() method of viewRootlpml to trigger view drawing.

In an aspect, the performTraverals() method invokes a relayout window RelayoutWindow() method to set a desired window height, window width, and the like. For example, the desired window height is the height of the back screen, and the desired window width is the width of the back screen. The WMS first executes the relayout window RelayoutWindow() method, and then turns on the back screen in a case in which it is determined that the foldable-screen device is in a folded state and a view (view) needs to be displayed on the back screen (before this, the back screen is in a black screen state).

In another aspect, in a process in which the payment application executes the performTraversals() method, a method of notifying window state callback for the back screen notifyWindowStateForBackDisplay() is executed first, then a perform drawing performdraw() method is executed, and then a render thread is executed, to store the drawn application interface data into buffer c. For a specific implementation of the performdraw() method and the render thread, refer to related descriptions of A11 in Embodiment 1. Details are not described herein again.

Specifically, in a process of executing the notifyWindowStateForBackDisplay() method, the payment application takes a screenshot of the current view (view) by using a get root view hardware buffer getRootViewHardwareBuffer() method, and stores related information (for example, a screenshot height, a screenshot width, and a screenshot format) of the view (view) screenshot into a buffer HardwareBuffer. The view (view) herein refers to a layer that has not been displayed on the back screen. In addition, the getRootViewHardwareBuffer() method invokes a window state changed callback WindowStateChangedCallback() method of the WMS to notify the WMS, where the WindowStateChangedCallback() carries the HardwareBuffer. Then, the WMS notifies the TapTap service by using an onWindowStateChanged() method, where the onWindowStateChanged() also carries the HardwareBuffer.

The HardwareBuffer is used to guide a buffer in the memory, that is, a buffer in which the view (view) screenshot is located. The HardwareBuffer is an object, similar to a structure. The WMS transfers the HardwareBuffer as a piece of data to the TapTap service.

For example, the HardwareBuffer may be specifically a buffer windowStateInfo. The buffer windowStateInfo includes a format, a picture width, a picture height, and the like.

B13. After the TapTap service receives the window state change notification from the WMS, the TapTap service obtains view (view) screenshot data from the HardwareBuffer-guided buffer, and decodes (decode) the view (view) screenshot data to obtain the view (view) screenshot.

B14. The TapTap service determines whether a display screenshot includes a two-dimensional code.

For example, the TapTap service may invoke a zxing service to identify whether the view (view) screenshot includes a two-dimensional code.

If the view (view) screenshot includes a two-dimensional code, and timing duration of a timer does not reach 5S, the TapTap service may execute the following B15 to B17.

If the view (view) screenshot includes no two-dimensional code, and the timing duration of the timer does not reach 5S, the TapTap service may wait for a window change to occur, and execute the foregoing B13 and B14 when a window change occurs.

If the view (view) screenshot includes no two-dimensional code, and the timing duration of the timer reaches 5S, the TapTap service may execute the following B18 and B19.

B15. The TapTap draws a mask, and stores the drawn mask into a buffer (such as buffer d) of the SurfaceFlinger.

Unlike the foregoing B8 in which the mask does not include a hole-punch area, the mask in B15 includes a hole-punch area.

After the payment application stores the drawn mask into a buffer (such as buffer d) of the SurfaceFlinger, the SurfaceFlinger reads mask data from the buffer d and reads the application interface data from the buffer c. Then, the SurfaceFlinger covers the mask over the application interface, and only the two-dimensional code is exposed from the hole-punch area, and the two are finally synthesized into one frame of image. Then, the SurfaceFlinger sends the frame of image to the back screen for displaying, so that the back screen displays the two-dimensional code.

B16. The TapTap draws a floating capsule and stores the drawn floating capsule into a buffer (such as buffer e) of the SurfaceFlinger. After synthesizing the floating capsule and another application interface (such as the e-book), the SurfaceFlinger sends synthesized content to the main screen for displaying.

The floating capsule in the foregoing B16 may include prompt information indicating that the two-dimensional code has been successfully displayed.

For a specific implementation of B16, refer to the related descriptions of A17 in the foregoing embodiment. Details are not described herein again.

B17. The TapTap service invokes an unregisterWindowStateChangedListener() method to notify the WMS to deregister the window listener WindowStateChangedListener.

It should be understood that if it is detected, within 5S, that the view (view) screenshot includes a two-dimensional code, it is not necessary to continue to monitor whether the two-dimensional code has been successfully displayed, and the TapTap service may notify the WMS to deregister the window listener WindowStateChangedListener.

B18. The TapTap service invokes a moveTaskToFrontDisplay() method, and notifies, by using the TapTap control service, the AMS to move the display task on the back screen to the main screen.

B19. The TapTap service invokes the unregisterWindowStateChangedListener() method to notify the WMS to deregister the window listener WindowStateChangedListener.

For specific implementations of B18 and B19, refer to the related descriptions of A19 and A20. Details are not described herein again.

It should be understood that if no two-dimensional code is detected when the maximum timing duration 5S is reached, it is not necessary to continue to monitor whether the two-dimensional code is successfully displayed, and the TapTap service may notify the WMS to deregister the window listener WindowStateChangedListener.

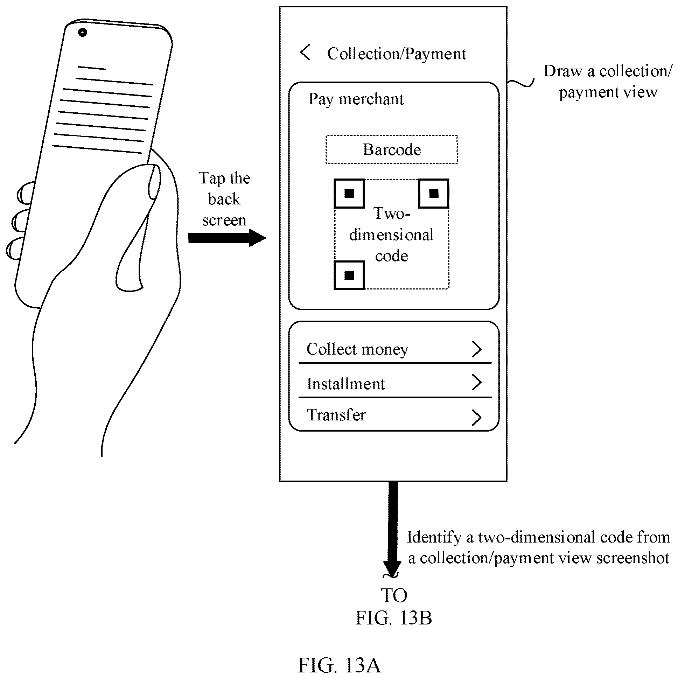

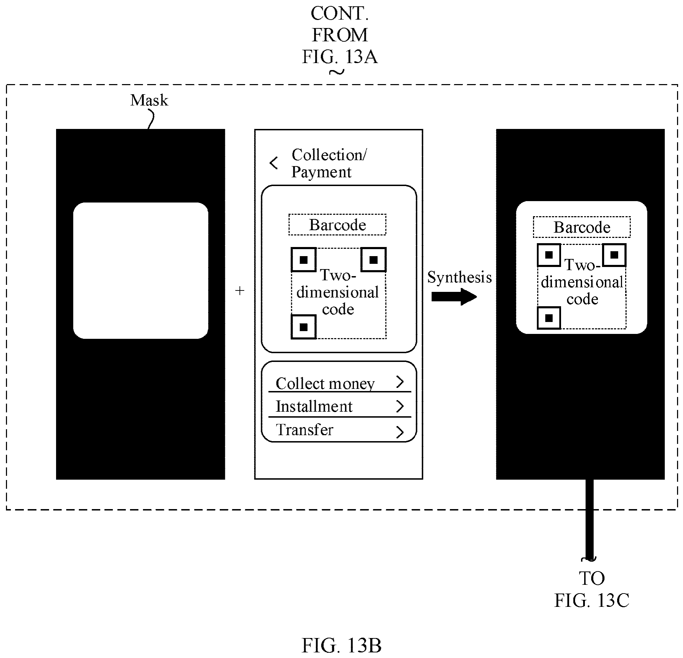

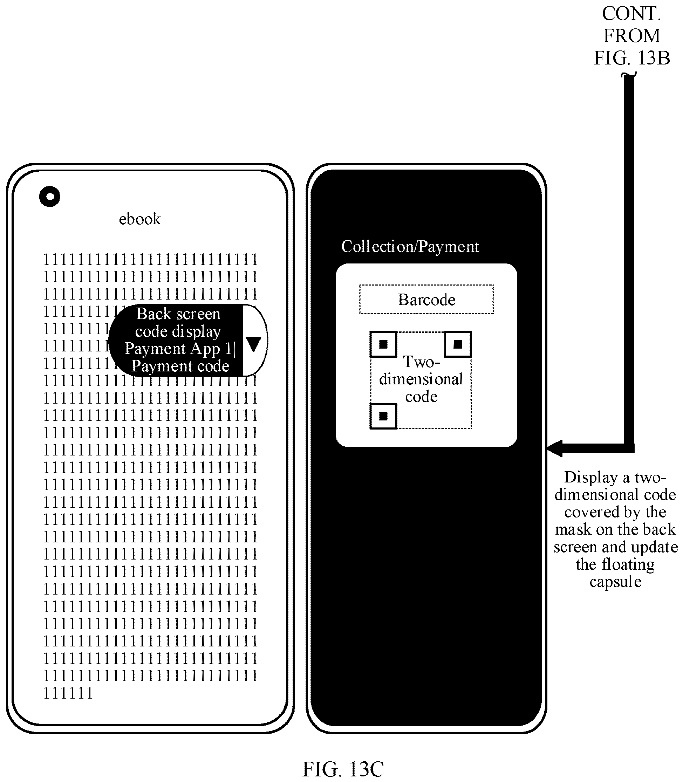

In an example, FIG. 13A to FIG. 13C show a schematic diagram of a scenario in which a two-dimensional code is identified from a view (view) screenshot. As shown in FIG. 13A to FIG. 13C, when the foldable screen is in a folded state, the user continuously taps the back screen two times. In one aspect, the foldable-screen device pops up, on the main screen, a floating capsule that includes "Payment App 1|Payment code|Loading". In another aspect, the foldable-screen device first draws a collection/payment view (view), and then obtains and identifies a view (view) screenshot. If it is identified that the view (view) screenshot includes a two-dimensional code, the foldable-screen device may cover a dark mask on an upper layer of the collection/payment view (view), so as to cover most areas of the collection/payment interface, and only the two-dimensional code and a barcode are exposed from a hole-punch area. Then, the SurfaceFlinger sends, to the back screen for displaying, the collection/payment interface covered by the mask, so that the back screen displays the collection/payment interface covered by the mask (for example, the two-dimensional code and the barcode). In addition, the foldable-screen device may further update the floating capsule on the main screen. For example, the prompt information of the floating capsule is updated from "Payment App 1|Payment code|Loading" to "Payment App 1|Payment code|Displayed on the back screen". According to the prompt information, the user may know that the back screen successfully displays the payment code from the Payment App 1. It should be understood that, for different payment applications or two-dimensional code interfaces that are pulled up, prompt information of the floating capsule is also different.

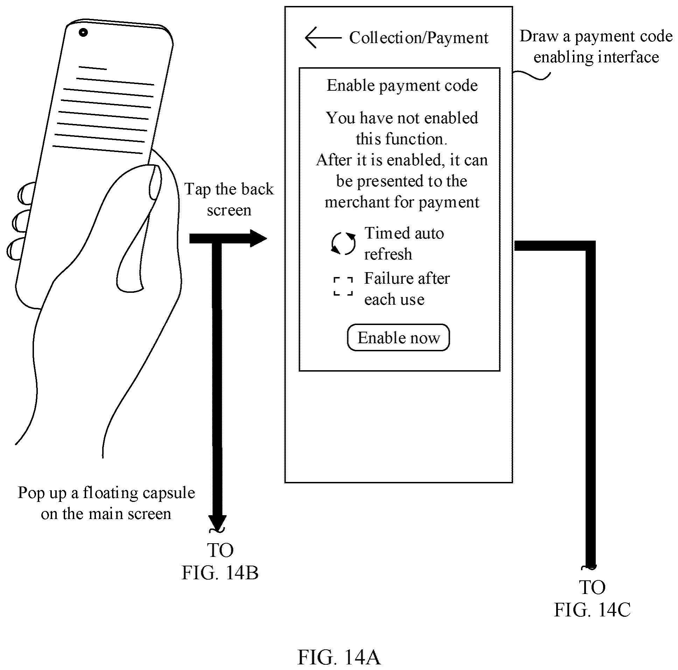

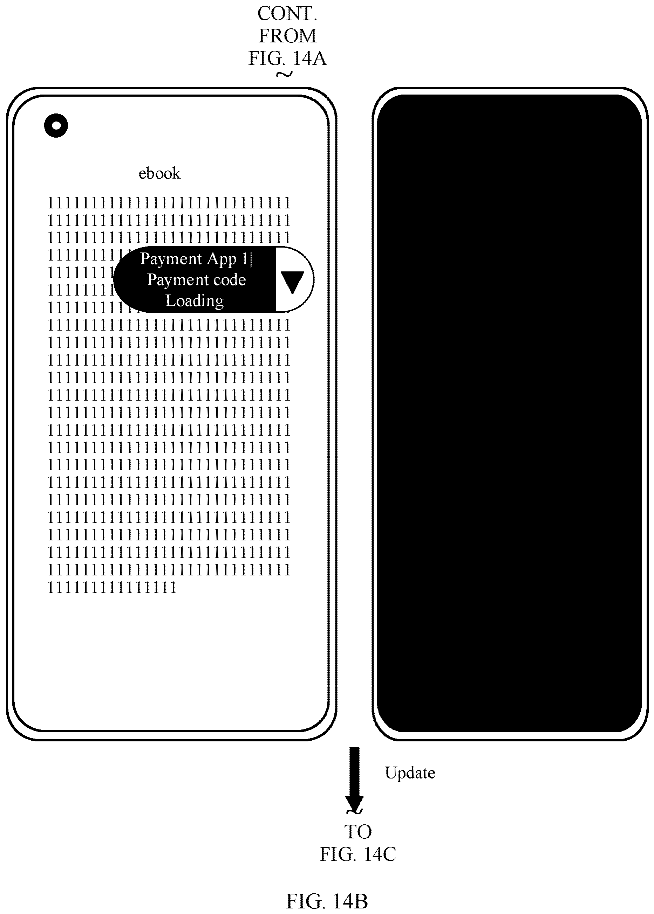

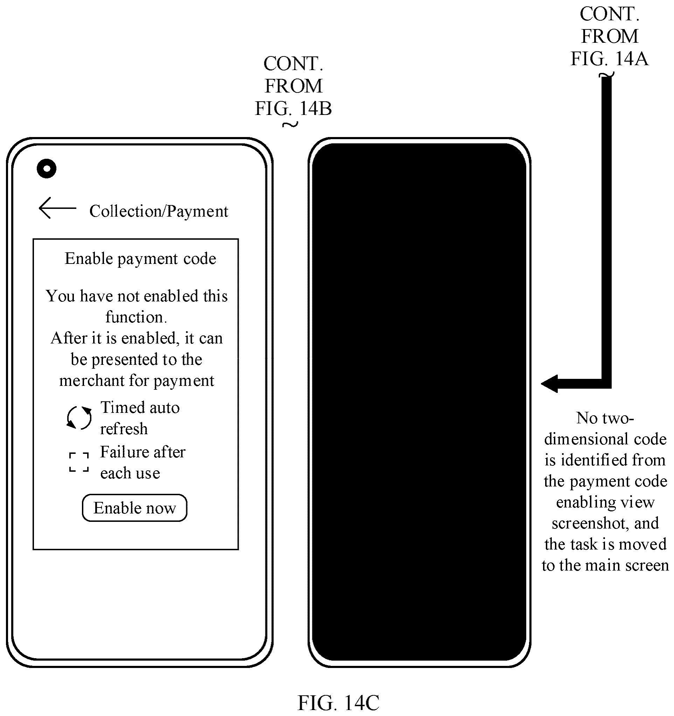

In an example, FIG. 14A to FIG. 14C show a schematic diagram of a scenario in which no two-dimensional code is identified from a view (view) screenshot. As shown in FIG. 14A to FIG. 14C, when the foldable screen is in a folded state, the user continuously taps the back screen two times. In one aspect, the foldable-screen device pops up, on the main screen, a floating capsule that includes "Payment App 1|Payment code|Loading". In another aspect, the foldable-screen device first draws a collection/payment view (view), and then obtains and identifies a view (view) screenshot. If it is identified that the view (view) screenshot does not include a two-dimensional code, the foldable-screen device may keep the back screen black, move a display task of the payment application to the main screen, and display a collection/payment enabling interface that is not covered by a mask on the main screen, so that the user does not need to flip the screen to find that the two-dimensional code is not successfully displayed on the back screen.

In the method provided in Embodiment 2, the TapTap service may monitor, by registering with the window listener WindowStateChangedListener, whether the view (view) screenshot includes a two-dimensional code, and if no two-dimensional code is identified from the display screenshot data, move the display task of the payment application to the main screen, so that the user can find, without flipping the screen, that the two-dimensional code is not successfully displayed on the back screen.

In the foregoing Embodiment 1 and Embodiment 2, two methods for identifying whether a two-dimensional code is displayed on a back screen of a foldable-screen device are described. With reference to the description in the foregoing embodiment, in either method, if the foldable-screen device does not detect a two-dimensional code when maximum duration is reached, the display task of the payment application is moved to the main screen, and the application interface that is not covered by the mask is displayed on the main screen, such as an interface for prompting the user to enable the payment code, an interface for prompting the user to determine to display a two-dimensional code, or an interface for prompting the user to enter a password of the payment application. In this way, the user does not need to flip the screen to find that the two-dimensional code is not successfully displayed on the back screen.

It should be noted that both the foregoing Embodiment 1 and Embodiment 2 are described by using an example in which the two-dimensional code interface cannot be pulled up on the back screen when the TapTap operation is received. This application is not limited thereto. Refer to the description of FIG. 3D(1) to FIG. 3D(3) in the foregoing embodiment. After the foldable-screen device has pulled up a two-dimensional code interface on the back screen, the user may trigger, by entering on the drop-down list, the foldable-screen device to pull up another two-dimensional code interface on the back screen. In a process of pulling up another two-dimensional code interface, if no two-dimensional code is identified, the display task of the payment application may be moved to the main screen with reference to the solution provided in the foregoing embodiment, and an application interface that is not covered by a mask is displayed on the main screen, such as an interface for prompting the user to enable a payment code, an interface for prompting the user to determine to display the two-dimensional code, or an interface for prompting the user to enter a password of the payment application. Reference may be made to the specific descriptions of the foregoing embodiments. Details are not described herein again.

This application further provides a method for triggering display of a two-dimensional code. When the main screen displays an application interface that does not include a two-dimensional code, the user may trigger display of a two-dimensional code on the main screen by performing an operation on the payment application interface on the main screen, such as an operation of authorizing the payment application to enable a payment code, an operation of determining to open a two-dimensional code interface, and an operation of entering an unlock password of the payment application.

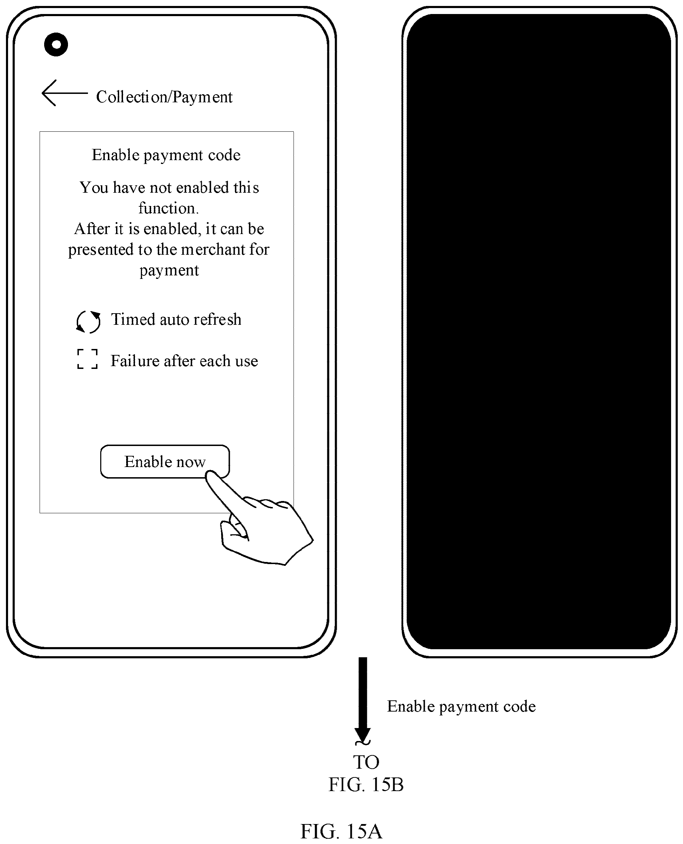

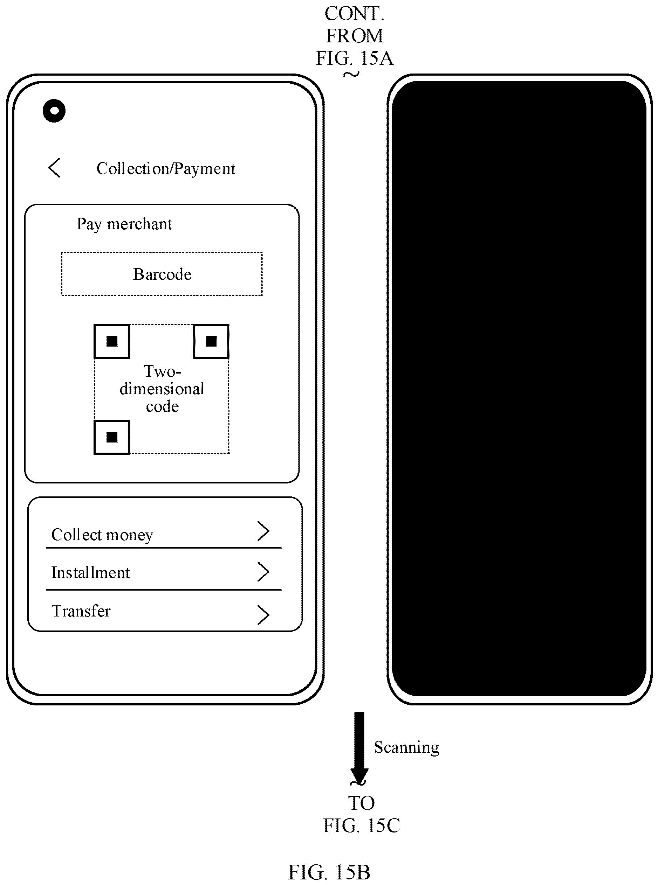

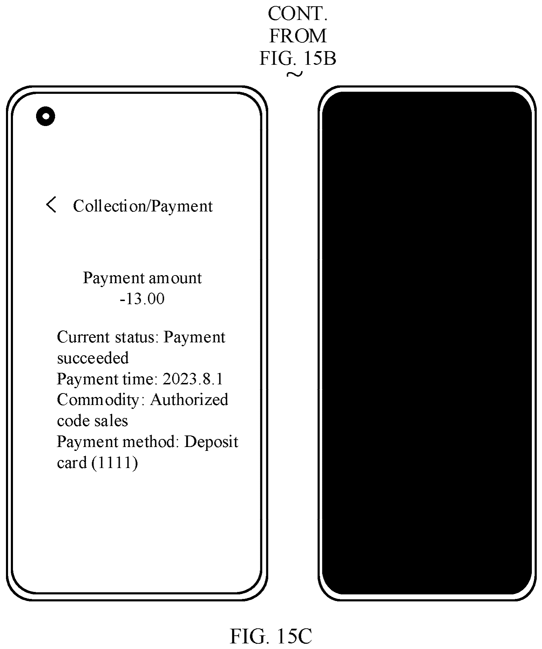

An example in which Payment App 1 is an application that displays a two-dimensional code by default on the back screen and Payment App 1 does not enable a two-dimensional code function is used for description. When the user triggers, through a double-tap operation on the back screen, the foldable-screen device to pull up a payment code of Payment App 1, if the foldable-screen device detects that Payment App 1 does not enable the two-dimensional code function in advance, an interface for enabling the payment code function shown in FIG. 15A may be displayed on the main screen. The interface may include a control that enables the two-dimensional code function, for example, an "Enable now" control. The user may tap the "Enable now" control. The foldable-screen device enables the two-dimensional code function of Payment App 1, and updates the interface for enabling the payment code function on the main screen to a collection/payment interface. The collection/payment interface includes a two-dimensional code and a barcode, and further includes options such as Collection, Installment, and Transfer. Then, the user may flip the main screen and enable the main screen to face a scanning device. After the payment succeeds, the foldable-screen device updates the collection/payment interface on the main screen to an interface indicating that the payment is successful. If the user triggers exiting of the payment application, the main screen may return to the e-book interface or display a home screen.

It should be understood that interfaces of payment applications designed by different application developers are different, and content exposed from a hole-punch area after being covered by a mask may also be different. The foldable-screen device may adjust a position of the hole-punch area in the interface for payment applications designed by different application developers, so that a two-dimensional code can be exposed from the hole-punch area.

An embodiment of this application further provides a foldable-screen device, including a processor. The processor is coupled to a memory, and the processor is configured to execute a computer program or instructions stored in the memory, to enable the foldable-screen device to perform the method according to the foregoing embodiments.

An embodiment of this application further provides a computer-readable storage medium. The computer-readable storage medium stores computer instructions, and when the computer-readable storage medium is run on a computer, the computer is enabled to perform the method described above. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any usable medium that can be accessed by a computer, or a data storage device, for example, a server or a data center, integrating one or more usable media. The available medium may be a magnetic medium (for example, a floppy disk, a hard disk, or a magnetic tape), an optical medium, a semiconductor medium (for example, a solid state disk (solid state disk, SSD)), or the like.

An embodiment of this application further provides a computer program product. The computer program product includes computer program code, and when the computer program code is run on a computer, the computer is enabled to perform the method in the foregoing embodiments.

An embodiment of this application further provides a chip. The chip is coupled to a memory. The chip is configured to read and execute a computer program or instructions stored in the memory, to perform the method in the foregoing embodiments. The chip may be a general-purpose processor or may be a dedicated processor. It should be noted that the chip may be implemented by using the following circuits or devices: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in the full text of this application.

The foldable-screen device, the computer-readable storage medium, the computer program product, and the chip provided in the embodiments of this application are all configured to perform the method provided above. Therefore, for beneficial effects that can be achieved by the foldable-screen device, the computer-readable storage medium, the computer program product, and the chip, refer to the beneficial effects corresponding to the method provided above. Details are not described herein again.

Through the descriptions of the foregoing implementations, a person skilled in the art may clearly understand that for the purpose of convenient and brief description, only division into the foregoing functional modules is used as an example for description. In actual application, the functions may be allocated to and completed by different functional modules based on a requirement. In other words, an internal structure of the apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes various media that can store program code, for example, a USB flash drive, a removable hard disk, a read only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A two-dimensional code display method, wherein the method is applied to an electronic device, the electronic device comprises a main screen and a back screen, and the main screen and the back screen are two display areas of a display screen; when the electronic device is in a folded state, the main screen and the back screen are oriented in opposite directions; when the electronic device is in an unfolded state, the main screen and the back screen are oriented in a same direction; and the method comprises:
displaying a first interface of a first application on the main screen at a first time point;
receiving a first tap operation on the back screen, and displaying a second interface of a second application on the back screen at a second time point, wherein the second interface comprises a two-dimensional code, the first interface is displayed on the main screen when the second interface is displayed on the back screen, the electronic device is in the folded state between the first time point and the second time point, the second application is an application that displays the two-dimensional code on the back screen, and the second application has enabled a two-dimensional code function;
displaying the first interface on the main screen at a third time point; and
receiving a second tap operation on the back screen, and displaying a third interface of a third application on the main screen at a fourth time point, wherein the third interface does not comprise a two-dimensional code, the electronic device is in the folded state between the third time point and the fourth time point, the third application is an application that displays a two-dimensional code on the back screen, and the third application does not enable a two-dimensional code function.

2. The method according to claim 1, wherein after the receiving a second tap operation on the back screen and before the fourth time point, the method further comprises:
displaying a fourth interface of the third application on the back screen, wherein the fourth interface does not comprise a two-dimensional code, a first area of the fourth interface is a black background, and display content of a second area of the fourth interface is the same as display content of a corresponding area of the third interface.

3. The method according to claim 1, wherein after the receiving a first tap operation on the back screen and before the second time point, the method further comprises: displaying a first floating capsule on the main screen, wherein the first floating capsule indicates that the two-dimensional code of the second application is being loaded on the back screen; and
after the displaying a second interface of a second application on the back screen and before the third time point, the method further comprises: displaying a second floating capsule on the main screen, wherein the second floating capsule indicates that the two-dimensional code of the second application has been displayed on the back screen.

4. The method according to claim 3, wherein the second floating capsule comprises an expand control, and
after the displaying a second floating capsule on the main screen, the method further comprises:
receiving an operation on the expand control, and displaying a plurality of two-dimensional code options on the main screen, wherein each two-dimensional code option corresponds to one two-dimensional code; and
receiving an operation on a first option in the plurality of two-dimensional code options, displaying a fifth interface of a fourth application on the back screen, wherein the fifth interface comprises a two-dimensional code, and the fourth application has enabled a two-dimensional code function; or
receiving an operation on a second option in the plurality of two-dimensional code options, displaying a sixth interface of a fifth application on the main screen, wherein the sixth interface comprises a two-dimensional code, and the fifth application has enabled a two-dimensional code function.

5. The method according to claim 1, wherein after the receiving a second tap operation on the back screen and before the fourth time point, the method further comprises:
displaying a third floating capsule on the main screen, wherein the third floating capsule indicates that a two-dimensional code of the third application is being loaded on the back screen, and the third floating capsule is not displayed at the fourth time point.

6. The method according to any one of claims 1 to 5, wherein after the receiving a first tap operation on the back screen, the method further comprises:
registering with a first listener;
obtaining an interface screenshot of the second application when the first listener detects that a life cycle of the second application changes or a window state of the second application is refreshed; and
identifying that the interface screenshot of the second application comprises a two-dimensional code; wherein
based on the identification that the interface screenshot of the second application comprises a two-dimensional code, the second interface comprises the two-dimensional code of the second application.

7. The method according to claim 6, wherein
the first listener is a first activity listener, and the first activity listener is configured to monitor a life cycle change of the second application; and the interface screenshot of the second application is a screenshot of the second interface that is sent to the back screen for displaying;
or
the first listener is a first window listener, and the first window listener is configured to monitor a window state change of the second application; and the interface screenshot of the second application is a screenshot of a view of the second application, and the view of the second application is a view that has not been displayed on the back screen.

8. The method according to claim 6 or 7, wherein before the second time point, the method further comprises:
combining the view of the second application and a mask view to obtain the second interface, wherein
a third area of the mask view is a black background, a fourth area of the mask view is transparent, an area corresponding to the third area in the second interface is a black background, and an area corresponding to the fourth area in the second interface is the two-dimensional code of the second application.

9. The method according to any one of claims 1 to 5, wherein after the receiving a second tap operation on the back screen, the method further comprises:
registering with a second listener;
obtaining an interface screenshot of the third application when the second listener detects that a life cycle of the third application changes or a window state of the third application is refreshed; and
identifying that the interface screenshot of the third application does not comprise a two-dimensional code, wherein
based on the identification that the interface screenshot of the third application does not comprise a two-dimensional code, the third interface does not comprise the two-dimensional code of the third application.

10. The method according to claim 9, wherein
the second listener is a second activity listener, and the second activity listener is configured to monitor a life cycle change of the third application; the interface screenshot of the third application is a screenshot of the fourth interface of the third application that is sent to the back screen for displaying; and the fourth interface does not comprise a two-dimensional code, the first area of the fourth interface is a black background, and display content of the second area of the fourth interface is the same as display content of the corresponding area of the third interface;
or
the second listener is a second window listener, and the second window listener is configured to monitor a window state change of the third application; and the interface screenshot of the third application is a screenshot of a view of the third application, and the view of the third application is a view that has not been displayed on the back screen.

11. The method according to any one of claims 1 to 10, wherein the third interface comprises a control for enabling a two-dimensional code function; and after the displaying a third interface of a third application on the main screen, the method further comprises:
receiving an operation on the control for enabling the two-dimensional code function, and displaying a seventh interface of the third application on the main screen, wherein the seventh interface comprises a two-dimensional code.

12. The method according to any one of claims 1 to 11, wherein before the third time point, the method further comprises:
receiving a selection operation for the third application; and
in response to the selection operation, setting the third application to an application that displays a two-dimensional code on the back screen.

13. The method according to any one of claims 1 to 12, wherein the first tap operation and the second tap operation are double-tap operations on the back screen.

14. An electronic device, comprising a processor and a memory coupled to the processor, wherein
the memory stores instructions, and the processor invokes the instructions, to enable the electronic device to perform the two-dimensional code display method according to any one of claims 1 to 13.

15. A chip, wherein the chip is coupled to a memory, and the chip is configured to read and execute a computer program stored in the memory, to implement the two-dimensional code display method according to any one of claims 1 to 13.

16. A computer-readable storage medium, wherein the computer-readable storage medium stores a computer program, and when the computer program is run on an electronic device, the electronic device is enabled to perform the two-dimensional code display method according to any one of claims 1 to 13.
